# EUROPEAN PATENT SPECIFICATION

(11) **EP 3 926 604 B1**
(45) Date of publication and mention of the grant of the patent: **21.05.2025**
(21) Application number: 19915094.7
(22) Date of filing: 15.02.2019
(51) Int. Cl.: G08G 3/02

(54) **COLLISION RISK CALCULATION METHOD, COLLISION RISK CALCULATION DEVICE, AND COLLISION RISK CALCULATION PROGRAM**
KOLLISIONSRISIKOBERECHNUNGSVERFAHREN, KOLLISIONSRISIKOBERECHNUNGSVORRICHTUNG UND KOLLISIONSRISIKOBERECHNUNGSPROGRAMM
PROCÉDÉ DE CALCUL DE RISQUE DE COLLISION, DISPOSITIF DE CALCUL DE RISQUE DE COLLISION ET PROGRAMME DE CALCUL DE RISQUE DE COLLISION

(43) Date of publication of application: 22.12.2021
(73) Proprietor: FUJITSU LIMITED, Kanagawa 211-8588 (JP)
(72) Inventor: WATANABE, Isamu, Kawasaki-shi, Kanagawa 211-8588 (JP)
(74) Representative: Hoffmann Eitle
(86) International application number: PCT/JP2019/005688
(87) International publication number: WO 2020/166083

(56) References cited:
- JP-A- H0 922 500
- JP-A- H0 922 500
- JP-A- H11 272 999
- JP-A- H11 272 999
- KR-A- 20120 074 874

## Description

### FIELD

The present invention relates to a collision risk calculation method and the like.

### BACKGROUND

A method of calculating a collision risk for navigation of a vessel is disclosed.

In one example, a first technology for calculating a collision risk from time to a collision is disclosed (see, for example, Patent Document 1). In such a technology, a collision risk calculation device calculates a future traveling direction range of one or both of a first vessel and a second vessel on the basis of a position of each of the first vessel and the second vessel, and travel information of a vessel that has navigated in the past. Then, the collision risk calculation device calculates a collision risk between the first vessel and the second vessel on the basis of the future traveling direction range (time to a collision).

Furthermore, in another example, a second technology for calculating a collision risk obtained by weighting and averaging collision risks calculated by using an existing risk evaluation model is disclosed (see, for example, Patent Documents 2 and 3). In such a technology, a collision risk calculation device calculates an area having a possibility of a future collision between a first vessel and a second vessel from travel information of each of the first vessel and the second vessel, and calculates a first risk value based on an amount of maneuvering performed by the first vessel or the second vessel to avoid this area. Then, the collision risk calculation device calculates a second risk value that numerically indicates the possibility of the future collision between the first vessel and the second vessel, and calculates a third risk value that indicates the possibility of the future collision between the first vessel and the second vessel by weighting the first risk value and the second risk value. The first risk value mentioned here means, for example, a numerical risk value represented in a numerical form, such as distance to closest point of approach (DCPA) or time to closest point of approach (TCPA), which indicates a distance at the closest approach. The second risk value means, for example, an area-type risk value represented in a geometrical form, such as an obstacle zone by target (OZT) or a collision danger line (CDL).

Furthermore, in another example, a technology for calculating a collision risk from a distance between vessels is proposed. Furthermore, a technology for calculating a collision risk by checking intersection of extension vectors of courses of vessels is proposed.

Patent Document 1: Japanese Laid-open Patent Publication No. 2017-182730, Patent Document 2: International Publication Pamphlet No. WO 2018/193595, Patent Document 3: International Publication Pamphlet No. WO 2018/193596**.** The documents JP H11 272999 A and KR 2012 0074874 A represent relevant background art with respect to the subject matter of the present publication. They disclose collision risk calculation approaches using track data of each of a first vessel and a second vessel and the subsequent determination of collision risk values.

### SUMMARY

### [TECHNICAL PROBLEM]

In the conventional technologies for calculating a collision risk, it may not be said that a risk level felt by a vessel maneuvering side and a navigation control side is sufficiently reflected, and there is a problem that a collision risk that is not necessarily said to match an on-site feeling is calculated.

For example, in the first technology, a collision risk is calculated on the basis of time to a collision. However, although this collision risk makes it possible to recognize that there is a risk of a collision, it is often not a collision risk felt by a captain or controller of a vessel. Furthermore, in the second technology, a collision risk obtained by weighting and averaging collision risks calculated by using an existing risk evaluation model is calculated. However, although this collision risk also makes it possible to recognize that there is a risk of a collision, it may be not necessarily said to be a collision risk that matches a degree of danger felt by a captain or controller of a vessel.

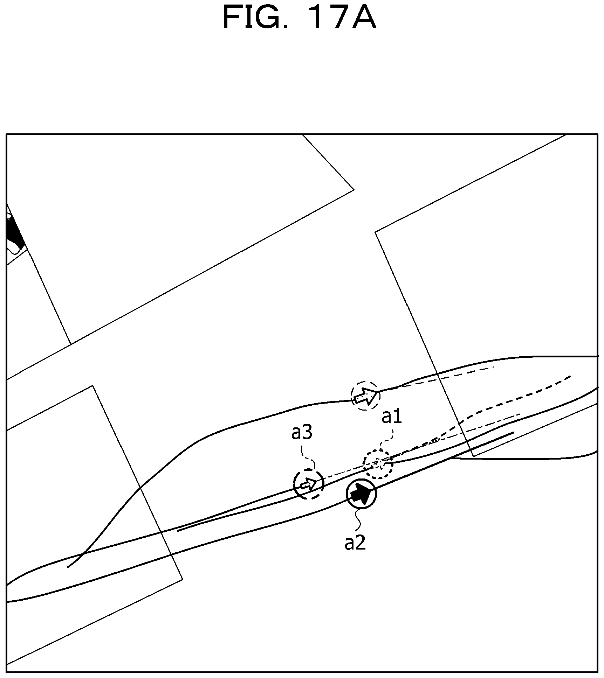

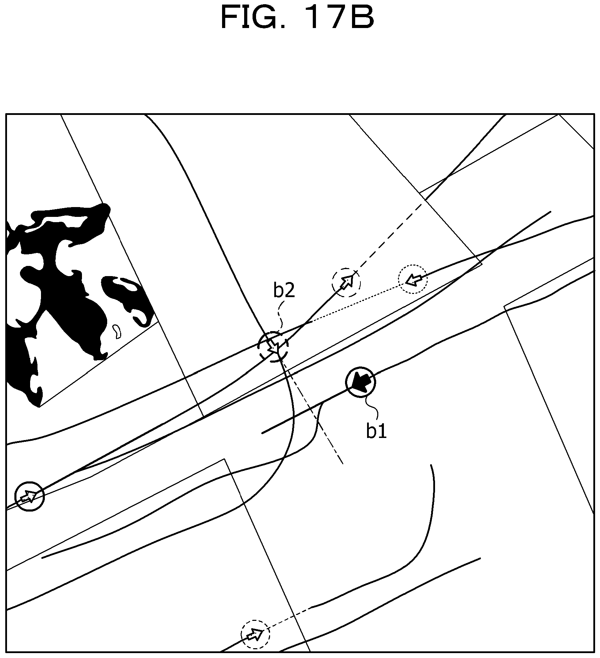

Here, a case where a collision risk does not match an on-site feeling will be described with reference to FIGs. 17A and 17B. FIGs. 17A and 17B are diagrams illustrating cases where a collision risk does not match an on-site feeling. Note that arrows in circles represent vessels.

FIG. 17A is a case where a vessel denoted by a reference sign a3 (vessel a3) interrupts between a vessel denoted by a reference sign a1 (vessel a1) and a vessel denoted by a reference sign a2 (vessel a2) to overtake. Here, the vessel a1 that is to be overtaken by the vessel a3 escapes in an upper right direction, and the vessel a3 that is to be overtaken by the vessel a3 escapes in a lower right direction. In such a case, since the vessels are relatively close to each other, for example, distances between the vessels are short, and a collision risk value calculated by a conventional method becomes large. However, in an on-site feeling in such a case, it is decided that the vessels are not in a near-miss state but in a safe state where the vessels are navigating with a margin. This is because the vessels a1, a2, and a3 are not performing extreme avoidance maneuvering, but navigating in an orderly manner. For example, in the conventional technology for calculating a collision risk, a collision risk that may not necessarily be said to match an on-site feeling is calculated.

FIG. 17B is a case where courses of a vessel denoted by a reference sign b1 (vessel b1) and a vessel denoted by a reference sign b2 (vessel b2) intersect. Here, the vessel b1 performs avoidance maneuvering to the lower left in front of the intersection. In such a case, the vessels b1 and b2 intersect, a distance to the intersection is short, and a collision risk value calculated by a conventional technology becomes large. However, in an on-site feeling in such a case, it is decided that the vessels are not in a near-miss state but in a safe state where the vessels are navigating with a margin. This is because the vessel b1 is performing avoidance maneuvering with a sufficient margin in terms of time and distance. For example, in the conventional technology for calculating a collision risk, a collision risk that may not necessarily be said to match an on-site feeling is calculated.

In one aspect, the present invention aims to calculate a collision risk that matches an on-site feeling.

### [SOLUTION TO PROBLEM]

The invention relates to a computer implemented method according to claim 1, to a collision risk calculation program in accordance to claim 3 and to a collision risk calculation device as claimed in claim 5.

### [ADVANTAGEOUS EFFECTS OF INVENTION]

According to one embodiment, it becomes possible to calculate a collision risk that matches an on-site feeling.

### BRIEF DESCRIPTION OF DRAWINGS

FIG. 1 is a functional block diagram illustrating a configuration of a collision risk calculation device according to an embodiment.
FIG. 2 is a diagram illustrating an example of a data configuration of AIS accumulated data according to the embodiment.
FIG. 3 is a diagram illustrating an example of a data configuration of replenished AIS data according to the embodiment.
FIG. 4 is a diagram illustrating an example of a data configuration of base risk information according to the embodiment.
FIG. 5 is a diagram illustrating an example of a data configuration of local maximum time point information according to the embodiment.
FIG. 6 is a diagram illustrating an example of data complement processing according to the embodiment.
FIG. 7 is a diagram for describing local maximum time point calculation processing according to the embodiment.
FIG. 8 is a diagram illustrating an example of a data configuration of integrated risk calculation result information according to the embodiment.
FIG. 9A is a diagram for describing index calculation processing according to the embodiment.
FIG. 9B is a diagram for describing the index calculation processing according to the embodiment.
FIG. 9C is a diagram for describing the index calculation processing according to the embodiment.
FIG. 9D is a diagram for describing the index calculation processing according to the embodiment.
FIG. 10 is a diagram illustrating an example of display by output processing according to the embodiment.
FIG. 11 is a diagram illustrating an example of a flowchart of the local maximum time point calculation processing according to the embodiment.
FIG. 12 is a diagram illustrating an example of a flowchart of index information calculation processing according to the embodiment.
FIG. 13 is a diagram illustrating an example of a flowchart of integrated risk calculation processing according to the embodiment.
FIG. 14 is a diagram illustrating an example of a flowchart of processing using an integrated risk value according to the embodiment.
FIG. 15A is a diagram illustrating a case where an integrated risk matches an on-site feeling.
FIG. 15B is a diagram illustrating a case where an integrated risk matches an on-site feeling.
FIG. 16 is a diagram illustrating an example of a computer that executes a collision risk calculation program.
FIG. 17A is a diagram illustrating a case where a collision risk does not match an on-site feeling.
FIG. 17B is a diagram illustrating a case where a collision risk does not match an on-site feeling.

### DESCRIPTION OF EMBODIMENTS

Hereinafter, embodiments of a collision risk calculation method, a collision risk calculation device, and a collision risk calculation program disclosed in the present application will be described in detail with reference to the drawings. Note that the embodiments do not limit the present invention.

### [Embodiments]

### <Configuration of Collision Risk Calculation Device>

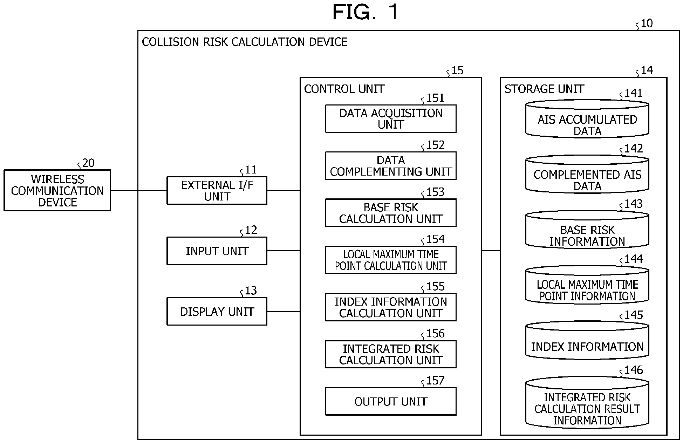

FIG. 1 is a functional block diagram illustrating a configuration of a collision risk calculation device according to an embodiment. As illustrated in FIG. 1, a collision risk calculation device 10 is a device that supports navigation of a vessel. The collision risk calculation device 10 quantifies a degree of maneuvering (avoidance maneuvering) to avoid a collision of vessels and a timing of avoidance maneuvering, and calculates, in combination with a risk value related to a collision of an existing method, an integrated risk value that reflects a danger level felt at an actual site. The actual site mentioned here means, for example, a captain on a maneuvering side or a controller on a navigation control side. For example, the collision risk calculation device 10 estimates a danger level (psychological state) felt by a captain or controller from an action (avoidance maneuvering) actually taken, and calculates an integrated risk value.

The collision risk calculation device 10 is mounted on, for example, a computer such as a server disposed in a land facility or a computer disposed on a vessel. The land facility mentioned here means a marine traffic center or port traffic control room in charge of monitoring and providing information regarding vessels on the sea. The collision risk calculation device 10 includes an external interface (I/F) unit 11, an input unit 12, a display unit 13, a storage unit 14, and a control unit 15.

The external I/F unit 11 is, for example, an interface that transmits and receives various types of information to and from another device. The external I/F unit 11 wirelessly communicates with each vessel via a wireless communication device 20 such as an antenna provided in the land facility, and transmits and receives various types of information to and from each vessel. For example, the external I/F unit 11 receives AIS information from each vessel via the wireless communication device 20.

The input unit 12 inputs various types of information. Examples of the input unit 12 include a device that receives input of operation made by a mouse, a keyboard, or the like. For example, the input unit 12 receives operation instructing start of various types of processing, and inputs operation information indicating received operation content to the control unit 15.

The display unit 13 displays various types of information. Examples of the display unit 13 include a device such as a liquid crystal display (LCD) or a cathode ray tube (CRT). For example, the display unit 13 displays various screens such as an operation screen.

The storage unit 14 is an external storage device such as a hard disk drive (HDD), a solid state drive (SSD), or an optical or magneto-optical disk. Note that the storage unit 14 may be a semiconductor memory element such as a random access memory (RAM), a flash memory, or a non volatile static random access memory (NVSRAM).

The storage unit 14 includes AIS accumulated data 141, complemented AIS data 142, base risk information 143, local maximum time point information 144, index information 145, and integrated risk calculation result information 146. Each of the AIS accumulated data 141, the complemented AIS data 142, the base risk information 143, the local maximum time point information 144, and the integrated risk calculation result information 146 has a data format of a table, as an example. However, the present invention is not limited to this, and each of the AIS accumulated data 141, the complemented AIS data 142, the base risk information 143, the local maximum time point information 144, and the integrated risk calculation result information 146 may have another data format such as a comma separated values (CSV) format.

The AIS accumulated data 141 is data obtained by accumulating AIS information received from each vessel. The complemented AIS data 142 is data obtained by complementing AIS information in the AIS accumulated data 141 at predetermined time intervals. The predetermined time interval is, as an example, a one-second interval, but may be a second interval larger than one second in order to suppress an amount of data. In the embodiment, description will be made assuming that the predetermined time interval is a 10-second interval. The complemented AIS data 142 is generated by a data complementing unit 152, which will be described later.

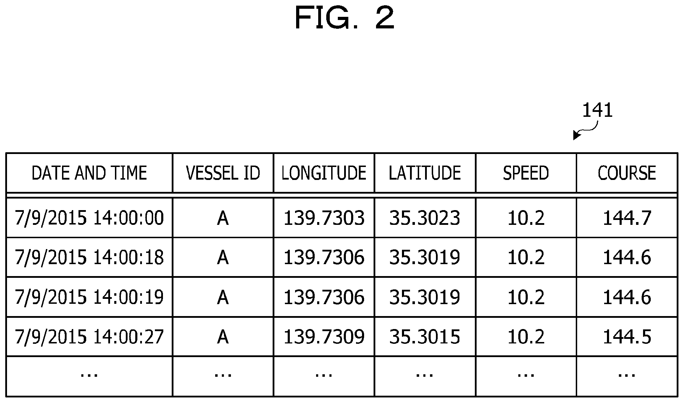

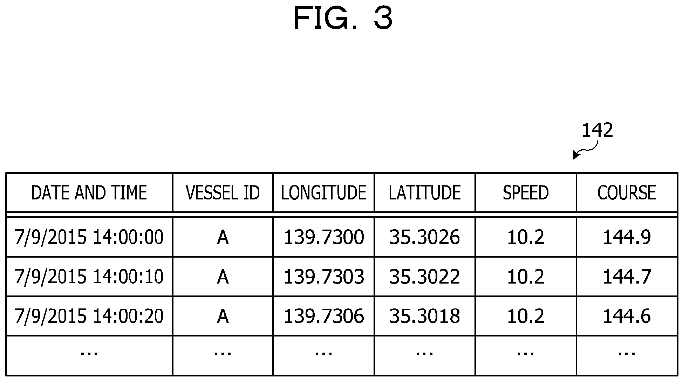

Here, examples of data configurations of the AIS accumulated data 141 and complemented AIS data 142 will be described with reference to FIGs. 2 and 3.

FIG. 2 is a diagram illustrating an example of the data configuration of the AIS accumulated data according to the embodiment. As illustrated in FIG. 2, the AIS accumulated data 141 is information in which longitude, latitude, a speed, and a course are associated with a date and time and a vessel identifier (ID). The vessel ID is an identifier that uniquely identifies a vessel. Furthermore, the course is assumed to have an angle based on a predetermined direction (0 degree). For example, the course has a clockwise angle with respect to the north direction.

As an example, in a case where the date and time is "7/9/2015 14:00:09" and the vessel ID is "A", "139.7303" is stored as the longitude, "35.3023" is stored as the latitude, "10.2" is stored as the speed, and "144.7" is stored as the course.

FIG. 3 is a diagram illustrating an example of the data configuration of the replenished AIS data according to the embodiment. As illustrated in FIG. 3, the complemented AIS data 142 has the data configuration similar to that of the AIS accumulated data 141. Here, the complemented AIS data 142 is complemented at 10-second intervals.

As an example, in a case where the date and time is "7/9/2015 14:00:09" and the vessel ID is "A", "139.7300" is stored as the longitude, "35.3026" is stored as the latitude, "10.2" is stored as the speed, and "144.9" is stored as the course. Furthermore, in a case where the date and time is "7/9/2015 14:00:10" and the vessel ID is "A", "139.7303" is stored as the longitude, "35.3022" is stored as the latitude, "10.2" is stored as the speed, and "144.7" is stored as the course.

Returning to FIG. 1, the base risk information 143 is information regarding a risk value that is calculated by a predetermined method and represents, in a numerical form, a collision risk of vessels at each time point when two vessels are paired. The risk value calculated by the predetermined method is hereinafter referred to as "base risk value". Note that the predetermined method may be, for example, a method disclosed in Japanese Laid-open Patent Publication No. 2017-182730, in which a collision risk is calculated from time to a collision. Furthermore, the predetermined method may be, for example, a method disclosed in International Publication Pamphlet No. WO 2018/193595, in which a collision risk obtained by weighting and averaging collision risks calculated by using an existing risk evaluation model is calculated. Furthermore, the predetermined method may be any method as long as it is an existing technology for calculating a collision risk of vessels. Note that the base risk information 143 is generated by a base risk calculation unit 153, which will be described later.

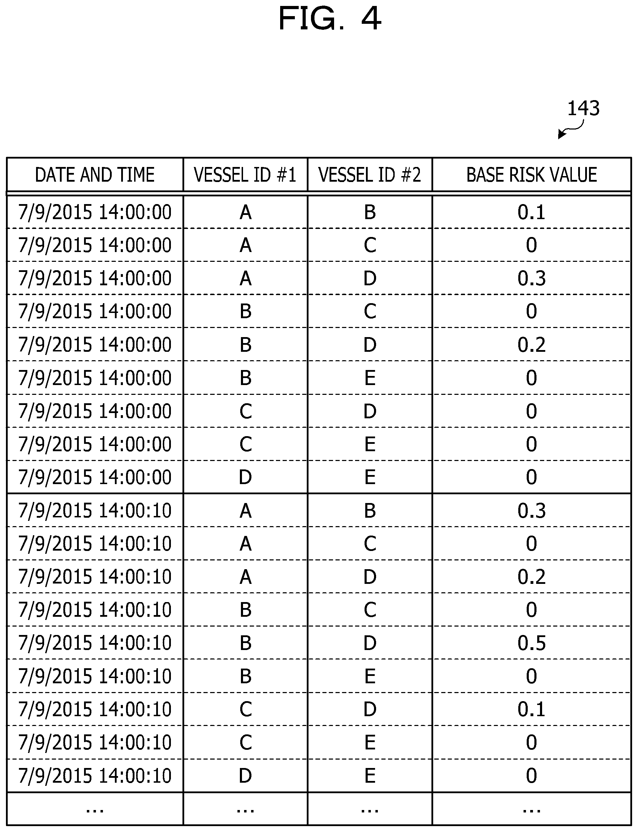

Here, an example of a data configuration of the base risk information 143 will be described with reference to FIG. 4. FIG. 4 is a diagram illustrating an example of the data configuration of the base risk information according to the embodiment. As illustrated in FIG. 4, the base risk information 143 is information in which a date and time, a vessel ID #1, a vessel ID #2, and a base risk value are associated with each other. The vessel ID #1 is an identifier that uniquely identifies one of a pair of vessels. The vessel ID #2 is an identifier that uniquely identifies the other of the pair of vessels. The date and time is a date and time of maneuvering the vessels. The base risk value is a risk value of the vessels as of a time point of the date and time in a case where the vessel ID #1 and vessel ID #2 are paired, and is a risk value calculated by a predetermined method.

As an example, in a case where the date and time is "7/9/2015 14:00:00", "A" is stored as the vessel ID #1, "B" is stored as the vessel ID #2, and "0.1" is stored as the base risk value. Furthermore, in a case where the date and time is "7/9/2015 14:00:00", "A" is stored as the vessel ID #1, "C" is stored as the vessel ID #2, and "0.0" is stored as the base risk value.

Returning to FIG. 1, the local maximum time point information 144 is information indicating a time point at which a base risk value reaches a local maximum for each pair of vessels. The time point at which a base risk value reaches a local maximum is assumed to be a time point which is a candidate for a near-miss state, at which one or both of vessels in a target pair perform avoidance maneuvering. Note that the local maximum time point information 144 is generated by a local maximum time point calculation unit 154, which will be described later.

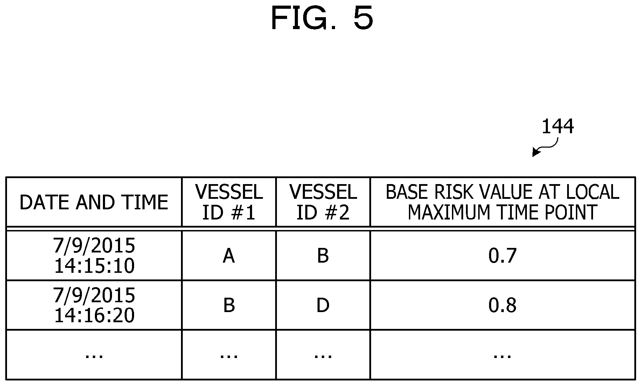

Here, an example of a data configuration of the local maximum time point information 144 will be described with reference to FIG. 5. FIG. 5 is a diagram illustrating an example of the data configuration of the local maximum time point information according to the embodiment. As illustrated in FIG. 5, the local maximum time point information 144 is information in which a date and time, a vessel ID #1, a vessel ID #2, and a base risk value at a local maximum time point are associated with each other. Since the date and time, vessel ID #1, and vessel ID #2 are similar to the date and time, vessel ID #1, and vessel ID #2 of the base risk information 143, the description thereof will be omitted. The base risk value at a local maximum time point indicates a base risk value of a date and time when the base risk value reaches a local maximum among base risk values of each date and time of the pair of vessels.

As an example, in a case where the date and time is "7/9/2015 14:15:10", "A" is stored as the vessel ID #1, "B" is stored as the vessel ID #2, and "0.7" is stored as the base risk value. Furthermore, in a case where the date and time is "7/9/2015 14:16:20", "B" is stored as the vessel ID #1, "D" is stored as the vessel ID #2, and "0.8" is stored as the base risk value.

Returning to FIG. 1, the index information 145 is information indicating various indexes indicating a degree of avoidance maneuvering and various indexes indicating a timing of avoidance maneuvering. The index information 145 is indicated for each pair of vessels. Examples of the indexes indicating a degree of avoidance maneuvering include a degree of change in orientation (course over ground) of a vessel during avoidance maneuvering, deceleration during avoidance maneuvering, the number of vessels performing avoidance maneuvering, whether or not there is a deviation from rules for preventing a collision on the sea established by the COLREG convention, and a delay in a timing of avoidance maneuvering. Note that the index information 145 is calculated by an index information calculation unit 155, which will be described later.

Here, the index information will be described.

Examples of one index information include a degree of change in orientation (course over ground) of a vessel during avoidance maneuvering (index information A). In a case of avoidance maneuvering with a margin, the change in orientation of a vessel is minimized. On the other hand, extreme change in course, such as one turn or a 180-degree turn of orientation of a vessel, is estimated to be a state where there is no margin in avoidance maneuvering and a state where a danger level is high, even at an actual site. Thus, the degree of change in orientation (course over ground) of a vessel during avoidance maneuvering for each of two vessels in a pair is calculated as the index information.

Examples of one index information include deceleration during avoidance maneuvering (index information B). During avoidance maneuvering, it is common to change a course without changing a speed as much as possible. On the other hand, sudden deceleration due to, for example, reverse rotation of a propeller screw is estimated to be a state where there is no margin in avoidance maneuvering and a state where a danger level is high even at an actual site. Thus, the deceleration during avoidance maneuvering for each of two vessels in a pair is calculated as the index information.

Examples of one index information include the number of vessels performing avoidance maneuvering (index information C). In a case where a collision between two vessels is avoided, usually one is a stand-on vessel that does not perform avoidance and the other is a give-way vessel that performs avoidance, and only one of the vessels performs avoidance maneuvering. In a case where two vessels perform avoidance at the same time, it is estimated that the vessels are in imminent danger to the extent that avoidance maneuvering of only one vessel is insufficient. Thus, the number of vessels performing avoidance maneuvering out of two vessels in a pair is calculated as the index information.

Examples of one index information include whether or not there is a deviation from the rules for preventing a collision on the sea established by the COLREG convention (index information D). The COLREG is established as the rules for preventing a collision on the sea. When avoidance maneuvering that does not comply with the COLREG is performed, it is considered that it was not possible to comply with the COLREG due to imminent danger. Furthermore, it is also considered that failure to comply with the COLREG may result in a dangerous state. In either case, danger is estimated to be imminent compared to a case where the rules are complied with. Thus, whether or not there is a deviation from the rules for preventing a collision on the sea established by the COLREG convention is calculated as the index information.

Examples of one index information include a delay in a start timing of avoidance maneuvering (index information E). When the start timing of avoidance maneuvering is delayed, it is estimated that danger is imminent. Thus, the delay in a start timing of avoidance maneuvering is calculated as the index information.

The integrated risk calculation result information 146 is information indicating a result of calculating an integrated risk value by combining a base risk value and various types of index information. The integrated risk calculation result information 146 is indicated for each pair of vessels. Note that the integrated risk calculation result information 146 is calculated by an integrated risk calculation unit 156.

The control unit 15 corresponds to an electronic circuit such as a central processing unit (CPU). In addition, the control unit 15 includes an internal memory for storing programs defining various processing procedures and control data, and executes a variety of types of processing by using the programs and the control data. The control unit 15 includes a data acquisition unit 151, the data complementing unit 152, the base risk calculation unit 153, the local maximum time point calculation unit 154, the index information calculation unit 155, the integrated risk calculation unit 156, and an output unit 157. Note that the base risk calculation unit 153 is an example of a first calculation unit. The index information calculation unit 155 is an example of a specification unit, an extraction unit, and a second calculation unit. The integrated risk calculation unit 156 is an example of a correction unit.

The data acquisition unit 151 acquires various types of data. For example, the data acquisition unit 151 acquires AIS information from each vessel via the wireless communication device 20. The data acquisition unit 151 stores the acquired AIS information in the AIS accumulated data 141. Note that, although the data acquisition unit 151 has been described as acquiring the AIS information from each vessel, the present invention is not limited thereto. The AIS information may be stored in an external storage device such as a storage device or a cloud. In such a case, the data acquisition unit 151 may acquire the AIS information of each vessel from the external storage device.

The data complementing unit 152 complements AIS information in the AIS accumulated data 141 at predetermined time intervals. For example, the data complementing unit 152 complements the AIS information in the AIS accumulated data 141 for each vessel, as an example, at one-second intervals. The reason why the AIS information in the AIS accumulated data 141 is complemented at predetermined time intervals is as follows. This is to match a date and time of AIS information in each vessel because, although AIS information is transmitted from each vessel, a period in which the AIS information is transmitted is different in each vessel, and the AIS information is transmitted asynchronously even in the same vessel. As to the complementation at one-second intervals, it is sufficient that interpolation is performed between AIS information already existing in the AIS accumulated data 141 and AIS information so as to be linearly complemented. Then, the data complementing unit 152 thins out AIS information so that complemented AIS accumulated data 141' includes data for every 10 seconds for each vessel, as an example, and stores remaining AIS information obtained by the thinning out in the complemented AIS data 142. The reason for thinning out AIS information is to suppress increase in an amount of data.

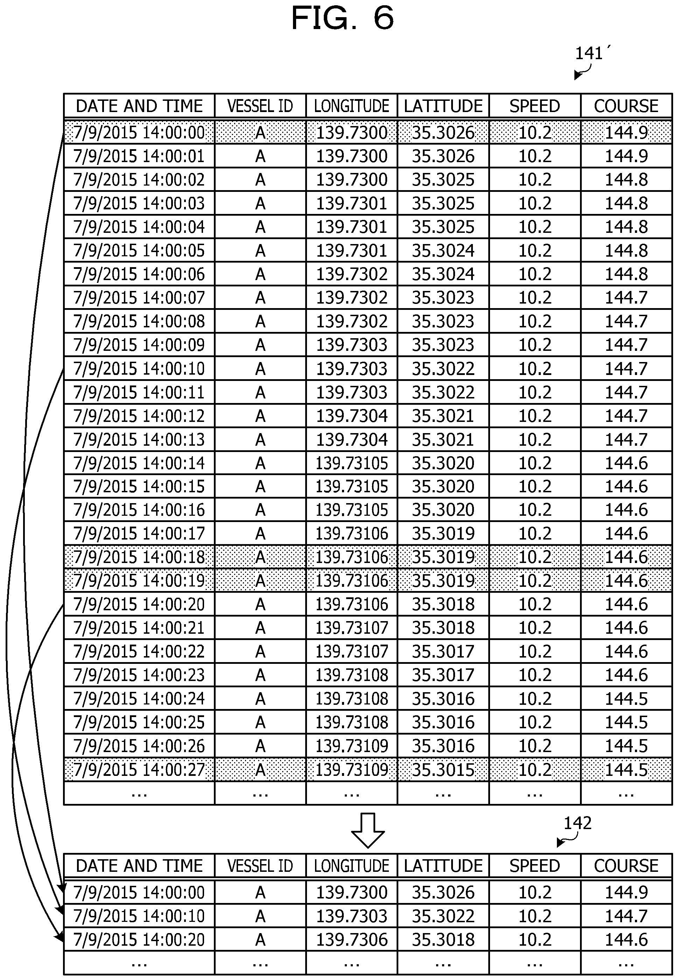

Here, an example of data complement processing performed by the data complementing unit 152 will be described with reference to FIG. 6. FIG. 6 is a diagram illustrating an example of the data complement processing according to the embodiment. Note that, in FIG. 6, a case is described where AIS information in the AIS accumulated data 141 illustrated in FIG. 2 is complemented at 10-second intervals. Highlighted information in a table illustrated in the upper diagram of FIG. 6 is AIS information already existing in the AIS accumulated data 141.

Under such circumstances, the data complementing unit 152 complements the AIS information in the AIS accumulated data 141 at one-second intervals. The complemented AIS accumulated data 141' is generated. Here, the data complementing unit 152 interpolates between AIS information of "7/9/2015 14:00:00" and AIS information of "7/9/2015 14:00:18". Furthermore, the data complementing unit 152 interpolates between AIS information of "7/9/2015 14:00:19" and AIS information of "7/9/2015 14:00:27".

Then, the data complementing unit 152 thins out the AIS information so that the complemented AIS accumulated data 141' includes data for every 10 seconds for each vessel. Remaining AIS information obtained by the thinning out is stored in the complemented AIS data 142. Here, the data complementing unit 152 thins out the AIS information so that complemented AIS accumulated data 141' includes data for every 10 seconds from "7/9/2015 14:00:00", and generates the complemented AIS data 142 illustrated in the lower diagram of FIG. 6.

Returning to FIG. 1, the base risk calculation unit 153 calculates base risk values at all time points of all pairs of vessels. For example, when receiving an instruction from a user regarding a period and sea area for calculating a base risk, the base risk calculation unit 153 refers to the complemented AIS data 142 to extract all pairs of vessels that has navigated in the instructed sea area in the instructed period. The base risk calculation unit 153 calculates, for all the extracted pairs of vessels, base risk values at all time points in the instructed period. It is sufficient that each base risk value is calculated by the predetermined method described above. Then, the base risk calculation unit 153 stores each calculated base risk value in the base risk information 143.

The local maximum time point calculation unit 154 calculates, for each pair of vessels, a local maximum time point of a base risk value calculated at each time point. For example, the local maximum time point calculation unit 154 sequentially selects a pair of vessels. The local maximum time point calculation unit 154 extracts, from the base risk information 143, a base risk value at each time point in the selected pair of vessels. The local maximum time point calculation unit 154 extracts a section in which a base risk value exceeds a predetermined threshold from all sections of the base risk value at each time point. The threshold mentioned here means a base risk value at a boundary between a case where a near-miss state is predicted and a case where a non-near-miss state is predicted. The threshold is predetermined by a user, but may be modified as appropriate. The local maximum time point calculation unit 154 calculates a time point at which the base risk value reaches a local maximum in the extracted section. Such a time point at which the base risk value reaches a local maximum is a time point of a candidate for a near-miss state of two vessels of the selected pair. Then, the local maximum time point calculation unit 154 stores the time point at which the base risk value reaches a local maximum and the base risk value in the local maximum time point information 144 together with the pair of vessels.

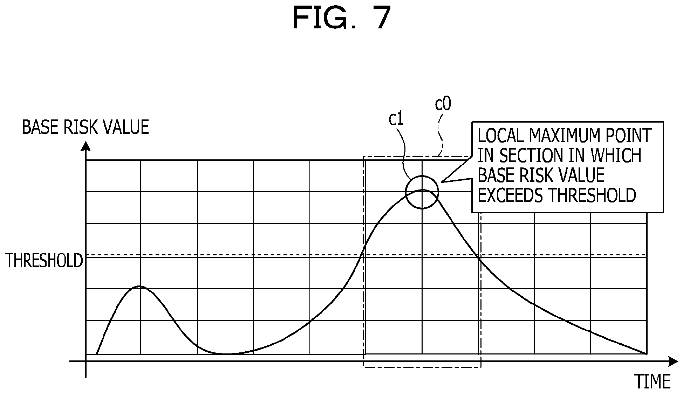

Here, local maximum time point calculation processing performed by the local maximum time point calculation unit 154 will be described with reference to FIG. 7. FIG. 7 is a diagram for describing the local maximum time point calculation processing according to the embodiment. FIG. 7 illustrates a graph indicating transition of a base risk value in a certain pair of vessels. For example, an X-axis of the graph represents time, and a Y-axis of the graph represents the base risk value.

The local maximum time point calculation unit 154 extracts a section in which a base risk value exceeds a predetermined threshold from all sections of the base risk value at each time point. Here, a section denoted by a reference sign c0 is extracted. Then, the local maximum time point calculation unit 154 calculates a time point at which the base risk value reaches a local maximum in the extracted section. Here, time of a local maximum point denoted by a reference sign c1 is calculated as the time point at which the base risk value reaches a local maximum. Such a time point at which the base risk value reaches a local maximum is a time point of a candidate for a near-miss state of two vessels of the selected pair.

Returning to FIG. 1, the index information calculation unit 155 calculates, by using AIS information in a time range before or before and after a time point at which a base risk value reaches a local maximum, index information obtained by quantifying a degree and timing of avoidance maneuvering in two vessels corresponding to the base risk value.

As an example, the index information calculation unit 155 calculates, as the index information (A), a degree of change in orientation (course over ground) of a vessel during avoidance maneuvering. For example, the index information calculation unit 155 specifies a certain period before a time point at which a base risk value reaches a local maximum, which is calculated by the local maximum time point calculation unit 154. The index information calculation unit 155 refers to the complemented AIS data 142 to extract, for a target vessel corresponding to the base risk value, an amount of change in orientation of the vessel as an action pattern within the specified certain period. Then, the index information calculation unit 155 calculates an absolute value of the amount of change in orientation of the vessel, and calculates, as a degree of the action pattern, a moving average of the absolute value of the amount of change in orientation of the vessel within a width of the certain period.

For example, for a certain period before a time point at which a base risk value reaches a local maximum, the index information calculation unit 155 quantifies, as the index information (A), a degree of change in orientation of a vessel during avoidance maneuvering at each time point. Note that the index information calculation unit 155 calculates the degree of change in orientation of a vessel during avoidance maneuvering by using a certain period before the time point at which the base risk value reaches a local maximum, which is calculated by the local maximum time point calculation unit 154. However, the present invention is not limited to this. In a case where a vessel performs avoidance maneuvering, the vessel returns to the original course after the avoidance. Thus, the degree of change in orientation of the vessel during avoidance maneuvering may also be calculated by using a certain period including before and after the time point at which the base risk value reaches a local maximum.

As another example, the index information calculation unit 155 calculates, as the index information (B), deceleration during avoidance maneuvering. For example, the index information calculation unit 155 specifies a certain period before a time point at which a base risk value reaches a local maximum, which is calculated by the local maximum time point calculation unit 154. The index information calculation unit 155 refers to the complemented AIS data 142 to extract, for a target vessel corresponding to the base risk value, an amount of change in speed (deceleration) of the vessel as an action pattern within the specified certain period. The index information calculation unit 155 calculates an absolute value of the amount of change in speed (deceleration) of the vessel, and calculates, as a degree of the action pattern, a moving average of the absolute value of the deceleration of the vessel within a width of the certain period.

For example, for a certain period before a time point at which a base risk value reaches a local maximum, the index information calculation unit 155 quantifies, as the index information (B), deceleration of a vessel during avoidance maneuvering at each time point.

As another example, the index information calculation unit 155 calculates, as the index information (C), the number of vessels performing avoidance maneuvering. For example, the index information calculation unit 155 calculates, for each of two vessels close to each other, a degree of an action pattern. The degree of the action pattern means either one or both of the index information (A) and index information (B). The index information calculation unit 155 determines whether or not the degree of each action pattern at a time point at which a base risk value corresponding to the two vessels close to each other reaches a local maximum exceeds a threshold. The threshold mentioned here is a value for deciding whether or not avoidance maneuvering to avoid a collision is performed. Then, the index information calculation unit 155 estimates that a vessel whose degree of the action pattern at the time point at which the base risk value reaches a local maximum exceeds the threshold is a vessel performing avoidance maneuvering to avoid a collision. Then, as a result of the estimation, the index information calculation unit 155 calculates, as the index information (C), the number of vessels performing avoidance maneuvering.

As another example, the index information calculation unit 155 calculates, as the index information (D), whether or not there is a deviation from the rules for preventing a collision on the sea established by the COLREG convention. For example, the index information calculation unit 155 calculates "1" as the index information (D) in a case where there is a deviation from the rules. The index information calculation unit 155 calculates "0" as the index information (D) in a case where there is no deviation from the rules. Whether or not there is a deviation from the rules may be determined by any method.

As another example, the index information calculation unit 155 calculates, as the index information (E), a delay in a start timing of avoidance maneuvering. For example, the index information calculation unit 155 acquires in advance a threshold of a base risk value calculated by an existing method, at which avoidance maneuvering with a margin is assumed to be started. The index information calculation unit 155 calculates, for each of two vessels corresponding to the base risk value, a degree of an action pattern. The degree of the action pattern means either one or both of the index information (A) and index information (B). The index information calculation unit 155 estimates, for each vessel, a start timing of avoidance maneuvering to avoid a collision by using the degree of the action pattern. As an example, in the case of the index information (A), a time point at which a moving average of an absolute value of change in course over ground of a vessel, for example, a degree of change in orientation of the vessel exceeds a specified threshold is estimated to be the start timing of avoidance maneuvering. In the case of the index information (B), a time point at which a moving average of an absolute value of deceleration, for example, a degree of deceleration of a vessel exceeds a specified threshold is estimated to be the start timing of avoidance maneuvering. Then, for each vessel, the index information calculation unit 155 uses the base risk value at the estimated start timing and the threshold of the risk value at which avoidance maneuvering is assumed to be started to determine whether or not the estimated start timing is delayed. For example, when the base risk value at the estimated start timing exceeds the threshold, it is determined that the start timing of avoidance maneuvering is delayed. When the base risk value at the estimated start timing does not exceed the threshold, it is determined that the start timing of avoidance maneuvering is not delayed. Then, when determining whether or not the start timing of avoidance maneuvering is delayed, the index information calculation unit 155 calculates, as the index information (E), a delay period of the start timing of avoidance maneuvering. It is sufficient that the delay period of the start timing of avoidance maneuvering is calculated by using the start timing of avoidance maneuvering and a start timing of avoidance maneuvering with a margin, which is obtained from the base risk value and the threshold. Note that, when determining that the start timing of avoidance maneuvering is not delayed, it is sufficient that the index information calculation unit 155 sets "0" as the index information (E).

The integrated risk calculation unit 156 calculates an integrated risk value at each time point within a certain period before a time point at which a base risk value reaches a local maximum on the basis of index information calculated by the index information calculation unit 155 and a weight set for each index information. For example, the integrated risk calculation unit 156 corrects a base risk value on the basis of a degree of an action pattern and a weight set for each action pattern.

For example, the integrated risk calculation unit 156 refers to the complemented AIS data 142 to calculate, for target vessels corresponding to a base risk value, the closest approach distance in a certain period before and after a time point at which the base risk value reaches a local maximum. Then, in a case where the closest approach distance is equal to or less than a threshold of a distance estimated to have a high possibility of a collision, the integrated risk calculation unit 156 sets "1" as a closest approach distance flag. In a case where the closest approach distance is greater than the distance, the integrated risk calculation unit 156 sets "0" as the closest approach distance flag.

Then, the integrated risk calculation unit 156 calculates, for the target vessels corresponding to the base risk value, an integrated risk value by weighting the closest approach distance flag and the various types of index information A to E. As an example, the integrated risk calculation unit 156 calculates, for the target vessels corresponding to the base risk value, an integrated risk value R by the following Equation (1).Integrated risk value R = base risk value + closest approach distance flag × weight WF + index information A × weight WA + index information B × weight WB + index information C × weight WC + index information D × weight WD + index information E × weight WE ...

Note that each weight is predetermined by a user, but may be modified as appropriate.

With this configuration, the integrated risk calculation unit 156 may calculate a collision risk that matches an on-site feeling by incorporating a degree of avoidance maneuvering and a timing of avoidance maneuvering. Furthermore, the integrated risk calculation unit 156 may determine, on the basis of an integrated risk value, whether a candidate for a near-miss state corresponding to a local maximum base risk value is a near-miss state or not a near-miss state in an on-site feeling.

The output unit 157 outputs an integrated risk value.

For example, the output unit 157 stores, for each pair of vessels, a date and time, a vessel ID #1, a vessel ID #2, a base risk value, and an integrated risk value in the integrated risk calculation result information 146 in association with each other. Note that various types of index information may be added.

Furthermore, the output unit 157 displays track information of vessels in a specific area on the display unit 13. Then, the output unit 157 selects two vessels from the track information of vessels. Then, the output unit 157 refers to the integrated risk calculation result information 146 to display time change of integrated risk values of the two selected vessels. Note that it is sufficient that the two vessels are selected by a user, for example.

### [Example of Data Configuration of Integrated Risk Calculation Result Information]

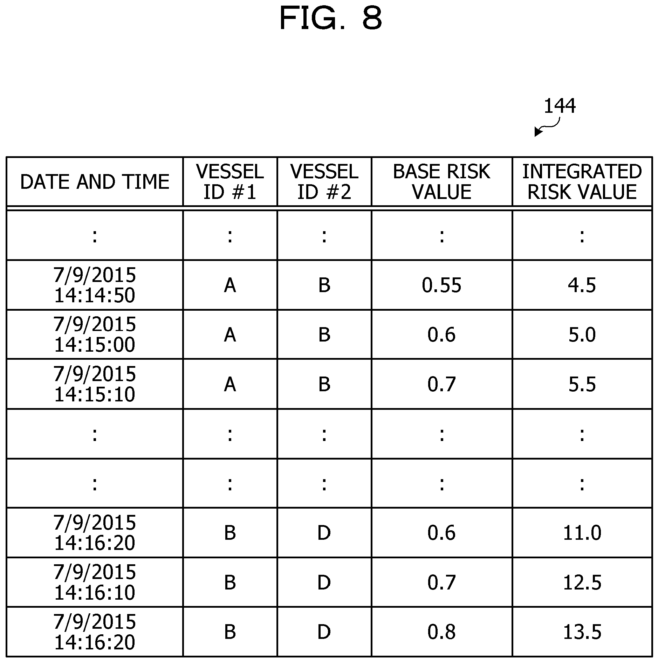

Here, an example of a data configuration of the integrated risk calculation result information 146 will be described with reference to FIG. 8. FIG. 8 is a diagram illustrating an example of the data configuration of the integrated risk calculation result information according to the embodiment. As illustrated in FIG. 8, the integrated risk calculation result information 146 is information in which a date and time, a vessel ID #1, a vessel ID #2, a base risk value, and an integrated risk value are associated with each other. The base risk value matches the base risk value corresponding to the date and time, vessel ID #1, and vessel ID #2 of the base risk information 143. The integrated risk value is a risk value obtained by correcting a base risk value corresponding to a vessel ID #1 and vessel ID #2 of a certain date and time.

As an example, in a case where the date and time is "7/9/2015 14:14:50", "A" is stored as the vessel ID #1, "B" is stored as the vessel ID #2, "0.55" is stored as the base risk value, and "4.5" is stored as the integrated risk value. In a case where the date and time is "7/9/2015 14:15:10", "A" is stored as the vessel ID #1, "B" is stored as the vessel ID #2, "0.7" is stored as the base risk value, and "5.5" is stored as the integrated risk value.

### [Example of Index Calculation Processing]

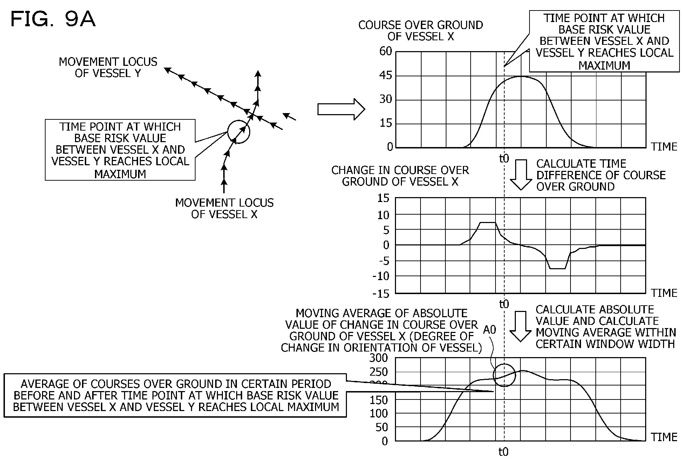

Here, index calculation processing according to the embodiment will be described with reference to FIGs. 9A to 9D. FIGs. 9A to 9D are diagrams for describing the index calculation processing according to the embodiment.

### [In Case of Index Information (A)]

In FIG. 9A, a case will be described where the index information calculation unit 155 calculates, as the index information (A), a degree of change in orientation (course over ground) of a vessel during avoidance maneuvering. In the left diagram of FIG. 9A, movement loci of a vessel X and a vessel Y are represented. A time point at which a base risk value between the vessel X and the vessel Y reaches a local maximum is represented by a circle. The time point at which the base risk value reaches a local maximum is calculated by the local maximum time point calculation unit 154. Note that, in FIG. 9A, a case will be described where the index information (A) is calculated by using a certain period before and after the time point at which the base risk value reaches a local maximum.

As illustrated in the upper right diagram of FIG. 9A, under such circumstances, orientation (course over ground) of a vessel of the vessel X for each hour is represented in a graph. A time point indicated by a dotted line is a time point t0 at which the base risk value between the vessel X and the vessel Y reaches a local maximum. The index information calculation unit 155 specifies a certain period before and after the time point t0 at which the base risk value reaches a local maximum.

As illustrated in the middle diagram of FIG. 9A, the index information calculation unit 155 refers to the complemented AIS data 142 to extract, for the target vessel X corresponding to the base risk value, an amount of change in orientation (course over ground) of a vessel as an action pattern within the specified certain period. For example, the index information calculation unit 155 calculates a time difference of the course over ground. Here, change in course over ground of the vessel X is indicated in the graph.

As illustrated in the lower diagram of FIG. 9A, the index information calculation unit 155 calculates an absolute value of the amount of change in orientation (course over ground) of a vessel, and calculates, as a degree of the action pattern, a moving average of the absolute value within a width of the certain period (a certain window width). For example, the index information calculation unit 155 quantifies, as the index information (A), the degree of change in orientation (course over ground) of a vessel during avoidance maneuvering. Here, a reference sign A0 is the moving average of the absolute value of the change in orientation (course over ground) of the vessel X at the time point t0 at which the base risk value reaches a local maximum.

### [In Case of Index Information (B)]

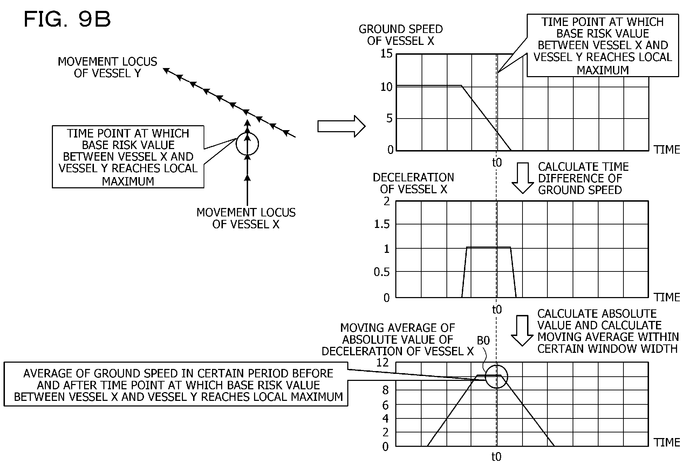

In FIG. 9B, a case will be described where the index information calculation unit 155 calculates, as the index information (B), deceleration during avoidance maneuvering. In the left diagram of FIG. 9B, movement loci of a vessel X and a vessel Y are represented. A difference in length of an arrow represents a difference in speed. It is represented that the shorter the length of the arrow, the slower the speed. Here, a case where the vessel X is decelerating is illustrated. Furthermore, a time point at which a base risk value between the vessel X and the vessel Y reaches a local maximum is represented by a circle. The time point at which the base risk value reaches a local maximum is calculated by the local maximum time point calculation unit 154.

As illustrated in the upper right diagram of FIG. 9B, under such circumstances, a ground speed of the vessel X for each hour is represented in a graph. A time point indicated by a dotted line is a time point t0 at which the base risk value between the vessel X and the vessel Y reaches a local maximum. The index information calculation unit 155 specifies a certain period before the time point t0 at which the base risk value reaches a local maximum.

As illustrated in the middle diagram of FIG. 9B, the index information calculation unit 155 refers to the complemented AIS data 142 to extract, for the target vessel corresponding to the base risk value, an amount of change in ground speed (deceleration) of the vessel X as an action pattern within the specified certain period. For example, the index information calculation unit 155 calculates a time difference of the ground speed. Here, change in ground speed of the vessel X is indicated in the graph.

As illustrated in the lower diagram of FIG. 9B, the index information calculation unit 155, the index information calculation unit 155 calculates an absolute value of the amount of change in speed (deceleration) of a vessel, and calculates, as a degree of the action pattern, a moving average of the absolute value of the deceleration of the vessel X within a width of the certain period (a certain window width). For example, the index information calculation unit 155 quantifies, as the index information (B), the deceleration of a vessel during avoidance maneuvering. Here, a reference sign B0 is the moving average of the absolute value of the ground speed of the vessel X at the time point t0 at which the base risk value reaches a local maximum.

### [In Case of Index Information (C)]

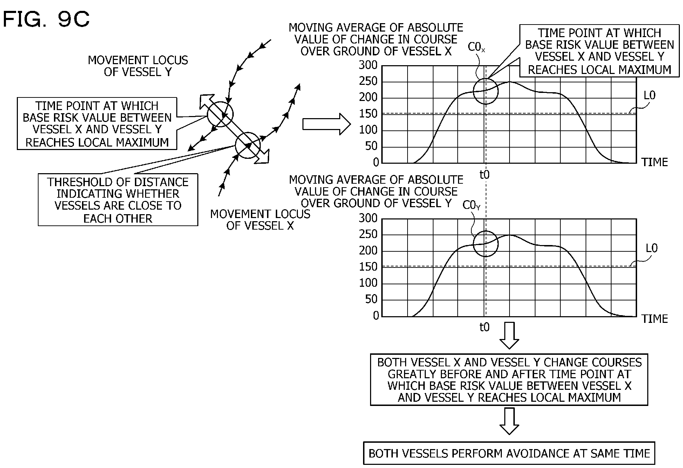

In FIG. 9C, a case will be described where the index information calculation unit 155 calculates, as the index information (C), the number of vessels performing avoidance maneuvering. In the left diagram of FIG. 9C, movement loci of a vessel X and a vessel Y are represented. A time point at which a base risk value between the vessel X and the vessel Y reaches a local maximum is represented by a circle. A width indicated by a double-headed arrow is a threshold of a distance indicating whether the vessels are close to each other. Here, the vessel X and the vessel Y are close to each other before and after such a time point at which the base risk value reaches a local maximum.

Under such circumstances, the index information calculation unit 155 calculates, for each of the two vessels X and Y close to each other, a degree of an action pattern. Here, the index information (A) indicating a moving average of an absolute value of change in course over ground (orientation) of a vessel is assumed to be used as the degree of the action pattern. In the upper right diagram of FIG. 9C, a graph of a moving average of an absolute value of change in course over ground (orientation) of the vessel X for each hour is represented. In the lower right diagram of FIG. 9C, a graph of a moving average of an absolute value of change in course over ground (orientation) of the vessel Y for each hour is represented.

The index information calculation unit 155 determines whether or not the degree of the action pattern of the vessel X at a time point t0 at which a base risk value corresponding to the two vessels X and Y close to each other reaches a local maximum exceeds a threshold L0. The threshold L0 is a value for deciding whether or not avoidance maneuvering to avoid a collision is performed. In other words, the threshold L0 is a threshold for deciding whether or not a degree of avoidance by course change is large. Here, as illustrated in the upper right diagram of FIG. 9C, a degree C0_{X} of the action pattern of the vessel X at the time point t0 at which the base risk value reaches a local maximum exceeds the threshold L0.

Furthermore, the index information calculation unit 155 determines whether or not the degree of the action pattern of the vessel Y at the time point t0 at which the base risk value corresponding to the two vessels X and Y close to each other reaches a local maximum exceeds the threshold L0. Here, as illustrated in the lower right diagram of FIG. 9C, a degree C0_{Y} of the action pattern of the vessel Y at the time point t0 at which the base risk value reaches a local maximum exceeds the threshold L0.

Then, the index information calculation unit 155 estimates that the vessel whose degree of the action pattern at the time point t0 at which the base risk value reaches a local maximum exceeds the threshold L is a vessel performing avoidance maneuvering to avoid a collision. Here, since the degree of the action pattern exceeds the threshold L for both vessels X and Y, it is estimated that both vessels X and Y are vessels performing avoidance maneuvering. Then, the index information calculation unit 155 calculates, as the index information (C), the number "2" of vessels performing avoidance maneuvering.

### [In Case of Index Information (D)]

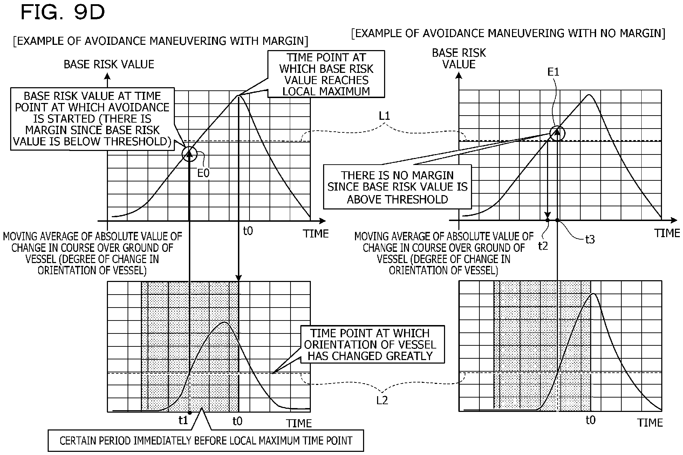

In FIG. 9D, a case will be described where the index information calculation unit 155 calculates, as the index information (E), a delay in a start timing of avoidance maneuvering. The left diagram of FIG. 9D is an example of a case where there is a margin in the start timing of avoidance maneuvering, and the right diagram of FIG. 9D is an example of a case where there is no margin in the start timing of avoidance maneuvering.

As illustrated in the left diagram of FIG. 9D, the index information calculation unit 155 calculates, for a vessel corresponding to a base risk value, a degree of an action pattern. Here, the index information (A) indicating a moving average of an absolute value of change in course over ground of a vessel (a degree of change in orientation of a vessel) is assumed to be used as the degree of the action pattern.

The index information calculation unit 155 extracts, in a certain period immediately before a time point t0 at which the base risk value reaches a local maximum, a time point at which the moving average of the absolute value of the change in course over ground of a vessel, for example, the degree of change in orientation of a vessel exceeds a specified threshold. Here, a time point t1 at which the moving average of the absolute value of the change in course over ground of a vessel exceeds a specified threshold L2 is extracted. Thus, it is estimated that such a time point t1 is the start timing of avoidance maneuvering. The index information calculation unit 155 uses a base risk value E0 corresponding to the estimated start timing t1 and a threshold at which avoidance maneuvering is assumed to be started (threshold of the base risk value when avoidance maneuvering with a margin is started) L1 to determine whether or not the estimated start timing is delayed. Here, since the base risk value E0 at the estimated start timing t1 does not exceed the threshold L1, it is determined that the estimated start timing is not delayed, for example, there is a margin in the start timing of avoidance maneuvering. Thus, the index information calculation unit 155 sets "0" as the index information (E).

On the other hand, as illustrated in the right diagram of FIG. 9D, the index information calculation unit 155 extracts, in the certain period immediately before the time point t0 at which the base risk value reaches a local maximum, a time point at which the moving average of the absolute value of the change in course over ground of a vessel, for example, the degree of change in orientation of a vessel exceeds the specified threshold. Here, a time point t3 at which the moving average of the absolute value of the change in course over ground of a vessel exceeds the specified threshold L2 is extracted. Thus, it is estimated that such a time point t3 is the start timing of avoidance maneuvering. The index information calculation unit 155 uses a base risk value E1 at the estimated start timing t3 and the threshold L1 to determine whether or not the estimated start timing is delayed. Here, since the base risk value E1 corresponding to the estimated start timing t3 exceeds the threshold L1, it is determined that the estimated start timing is delayed, for example, there is no margin in the start timing of avoidance maneuvering. Thus, the index information calculation unit 155 calculates, as the index information (E), a delay period of the start timing of avoidance maneuvering. To obtain the delay period of the start timing of avoidance maneuvering, it is sufficient that a start timing t2 of avoidance maneuvering with a margin, which is obtained from the base risk value and the threshold L1, is subtracted from the start timing t3 of avoidance maneuvering.

### [Example of Display by Output Processing]

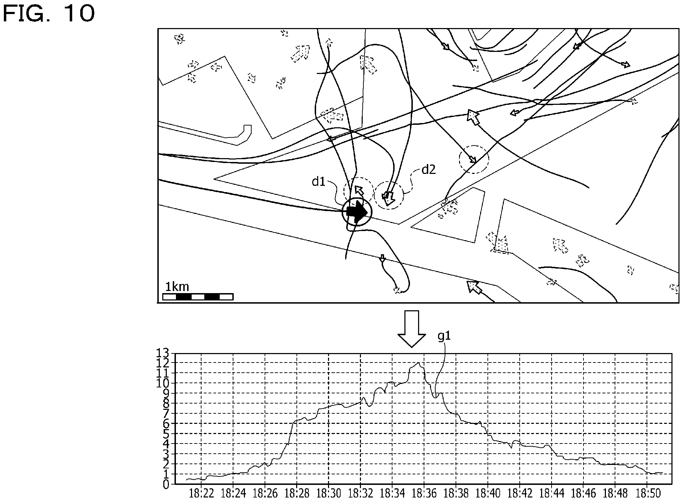

FIG. 10 is a diagram illustrating an example of display by output processing according to the embodiment. Note that, in the upper diagram of FIG. 10, movement loci of vessels in a specific area and in a specific period, which are displayed on the display unit 13, are represented. Arrows are the vessels.

Here, it is assumed that a user selects a vessel denoted by a reference sign d1 and a vessel denoted by a reference sign d2. Then, the output unit 157 refers to the integrated risk calculation result information 146 to display, on the display unit 13, time change of an integrated risk value at each time point in the specific period, which corresponds to the selected two vessels d1 and d2. As illustrated in the lower diagram of FIG. 10, for example, a graph g1 is a graph of the time change of the integrated risk value corresponding to the selected two vessels d1 and d2.

### [Flowchart of Local Maximum Time Point Calculation Processing]

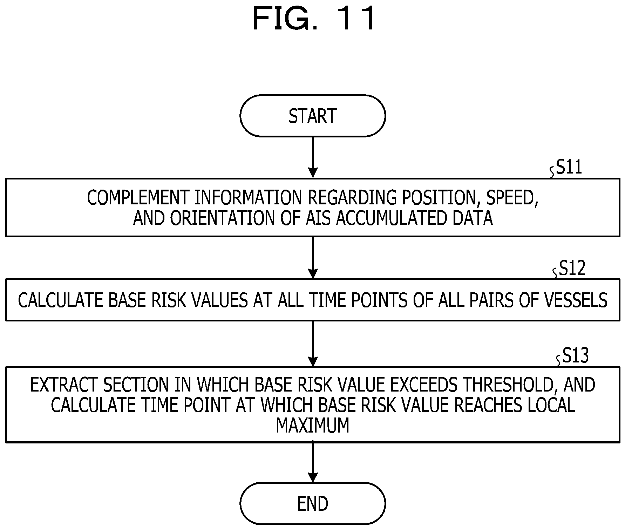

FIG. 11 is a diagram illustrating an example of a flowchart of local maximum time point calculation processing according to the embodiment. Note that the AIS accumulated data 141 is assumed to be stored in the storage unit 14.

The data complementing unit 152 complements information regarding a position (longitude and latitude), a speed, and orientation (course) of the AIS accumulated data 141 (Step S11). For example, the data complementing unit 152, the AIS accumulated data 141 complements, as an example, AIS information in the AIS accumulated data 141 for each vessel at one-second intervals, as an example. Then, the data complementing unit 152 thins out AIS information so that complemented AIS accumulated data 141' includes data for every 10 seconds for each vessel, as an example, and stores remaining AIS information obtained by the thinning out in the complemented AIS data 142.

Then, the base risk calculation unit 153 calculates base risk values at all time points of all pairs of vessels (Step S12). For example, the base risk calculation unit 153 refers to the complemented AIS data 142 to extract all pairs of vessels. The base risk calculation unit 153 calculates base risk values at all time points for all the extracted pairs of vessels. Then, the base risk calculation unit 153 stores each calculated base risk value in the base risk information 143. Note that the base risk calculation unit 153 may calculate base risk values at all time points of all pairs of vessels in a period and sea area for calculating a base risk value.

Then, for the base risk values at all time points of each pair of vessels, the local maximum time point calculation unit 154 extracts a section in which the base risk value exceeds a threshold, and calculates a time point at which the base risk value reaches a local maximum (Step S13). For example, the local maximum time point calculation unit 154 sequentially selects a pair of vessels. The local maximum time point calculation unit 154 extracts, from the base risk information 143, a base risk value at each time point in a selected pair of vessels. The local maximum time point calculation unit 154 extracts a section in which a base risk value exceeds a predetermined threshold from all sections of the base risk value at each time point. The local maximum time point calculation unit 154 calculates a time point at which the base risk value reaches a local maximum in the extracted section. Then, the local maximum time point calculation unit 154 stores the time point at which the base risk value reaches a local maximum and the base risk value in the local maximum time point information 144 together with the pair of vessels. Then, the local maximum time point calculation unit 154 ends the local maximum time point calculation processing.

### [Flowchart of Index Information Calculation Processing]

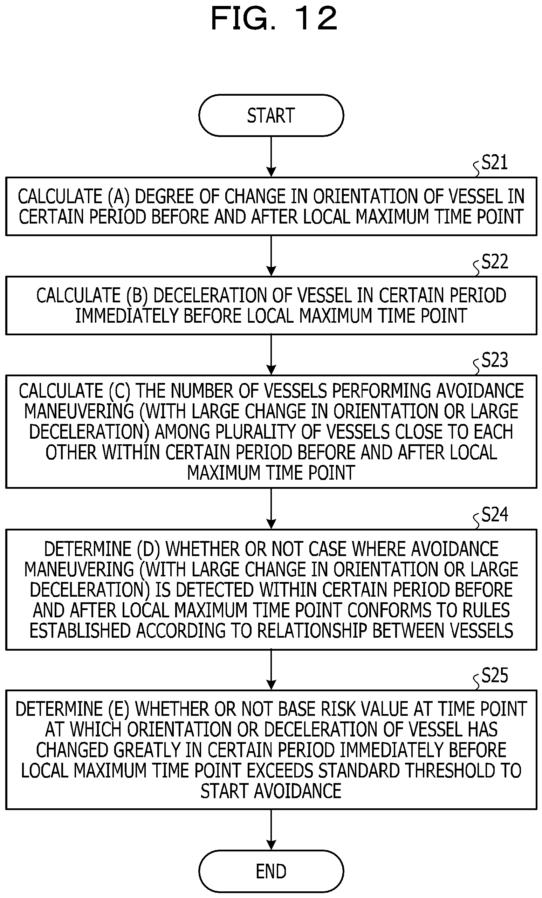

FIG. 12 is a diagram illustrating an example of a flowchart of index information calculation processing according to the embodiment. Note that, in the flowchart of FIG. 12, the index information calculation processing for one pair of vessels will be described.

As illustrated in FIG. 12, the index information calculation unit 155 calculates (A) a degree of change in orientation of a vessel in a certain period before and after a certain period before and after a local maximum time point (Step S21). For example, the index information calculation unit 155 specifies a certain period before and after a time point at which a base risk value reaches a local maximum. The index information calculation unit 155 refers to the complemented AIS data 142 to extract, for a pair of vessels corresponding to the base risk value, an amount of change in orientation of a vessel as an action pattern within the specified certain period. The index information calculation unit 155 calculates an absolute value of the amount of change in orientation of the vessel, and calculates, as a degree of the action pattern, a moving average of the absolute value of the amount of change in orientation of a vessel within a width of the certain period. For example, the index information calculation unit 155 quantifies, as the index information (A), the degree of change in orientation of a vessel during avoidance maneuvering.

Then, the index information calculation unit 155 calculates (B) deceleration of a vessel in a certain period immediately before a local maximum time point (Step S22). For example, the index information calculation unit 155 specifies a certain period before a time point at which a base risk value reaches a local maximum. The index information calculation unit 155 refers to the complemented AIS data 142 to extract, for a pair of vessels corresponding to the base risk value, an amount of change in speed (deceleration) of a vessel as an action pattern within the specified certain period. The index information calculation unit 155 calculates an absolute value of the amount of change in speed (deceleration) of a vessel, and calculates, as a degree of the action pattern, a moving average of the absolute value of the deceleration of a vessel within a width of the certain period. For example, the index information calculation unit 155 quantifies, as the index information (B), deceleration of a vessel during avoidance maneuvering.

Then, the index information calculation unit 155 calculates (C) the number of vessels performing avoidance maneuvering (with large change in orientation or large deceleration) among a plurality of vessels close to each other within a certain period before and after a local maximum time point. For example, the index information calculation unit 155 calculates, for each of two vessels close to each other, a degree of an action pattern. The degree of the action pattern means the index information (A) or the index information (B). The index information calculation unit 155 determines whether or not the degree of each action pattern at a time point at which a base risk value corresponding to the pair of vessels close to each other reaches a local maximum exceeds a threshold. Then, the index information calculation unit 155 estimates that a vessel whose degree of the action pattern at the time point at which the base risk value reaches a local maximum exceeds the threshold is a vessel performing avoidance maneuvering. Then, the index information calculation unit 155 calculates, as the index information (C), the number of vessels performing avoidance maneuvering.

Then, the index information calculation unit 155 determines (D) whether or not a case where avoidance maneuvering (with large change in orientation or large deceleration) is detected within a certain period before and after a local maximum time point conforms to rules established according to a relationship between vessels (Step S24). For example, the index information calculation unit 155 calculates "1" as the index information (D) in a case where there is a deviation from the rules for preventing a collision on the sea established by the COLREG convention. The index information calculation unit 155 calculates "0" as the index information (D) in a case where there is no deviation from the rules.

Then, the index information calculation unit 155 determines (E) whether or not a base risk value at a time point at which orientation or deceleration of a vessel changes greatly in a certain period immediately before a local maximum time point exceeds a standard threshold to start avoidance (Step S25). For example, the index information calculation unit 155 calculates, for each of a pair of vessels corresponding to the base risk value, a degree of an action pattern. The degree of the action pattern means the index information (A) or the index information (B). The index information calculation unit 155 estimates a start timing of avoidance maneuvering to avoid a collision by using the degree of each action pattern. Then, for each vessel, the index information calculation unit 155 uses a base risk value corresponding to the estimated start timing and the standard threshold to start avoidance to determine whether or not the estimated start timing is delayed. Then, in a case where it is determined that the start timing is delayed, the index information calculation unit 155 calculates a delay period as the index information (E).

Then, the index information calculation unit 155 ends the index information calculation processing.

### [Flowchart of Integrated Risk Calculation Processing]

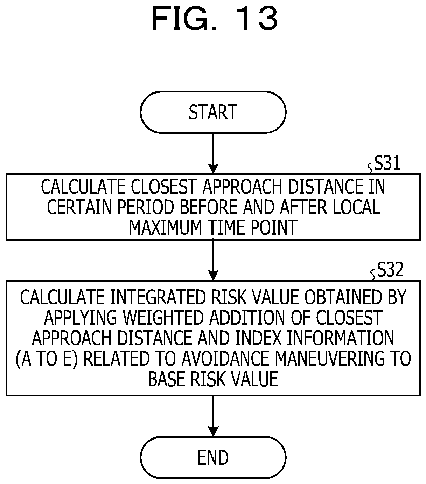

FIG. 13 is a diagram illustrating an example of a flowchart of integrated risk calculation processing according to the embodiment. Note that, in the flowchart of FIG. 13, the integrated risk calculation processing for one pair of vessels will be described.

As illustrated in FIG. 13, the integrated risk calculation unit 156 calculates the closest approach distance in a certain period before and after a local maximum time point (Step S31). For example, the integrated risk calculation unit 156 refers to the complemented AIS data 142 to calculate, for target vessels corresponding to a base risk value, the closest approach distance in a certain period before and after a time point at which the base risk value reaches a local maximum. Then, in a case where the closest approach distance is equal to or less than a threshold of a distance estimated to have a high possibility of a collision, the integrated risk calculation unit 156 sets "1" as a closest approach distance flag. In a case where the closest approach distance is greater than the distance, the integrated risk calculation unit 156 sets "0" as the closest approach distance flag.

Then, the integrated risk calculation unit 156 calculates an integrated risk value obtained by applying weighted addition of the closest approach distance and the index information (A to E) related to avoidance maneuvering to a base risk value (Step S32). For example, the integrated risk calculation unit 156 calculates, by using Equation (1), an integrated risk value obtained by correcting a base risk value. Then, the output unit 157 stores, for a pair of vessels corresponding to the base risk value, a date and time, a vessel ID #1, a vessel ID #2, a base risk value, and an integrated risk value in the integrated risk calculation result information 146 in association with each other.

Then, the integrated risk calculation unit 156 ends the integrated risk calculation processing.

With this configuration, the integrated risk calculation unit 156 may calculate a collision risk that matches an on-site feeling by correcting a base risk value to an integrated risk value that incorporates a degree and timing of avoidance maneuvering.

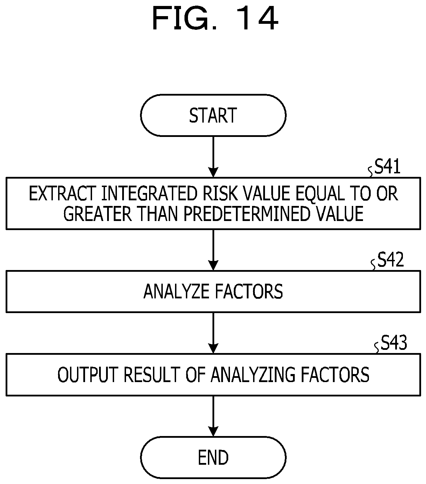

Note that various types of processing may be performed by using an integrated risk value. Examples of one processing include a case where factors of past unsafe navigation are analyzed by using an integrated risk value. Furthermore, examples of another processing include a case where a route of a pair of vessels with a high integrated risk value is reproduced and used for training of captains and controllers. Here, a flowchart of the case where factors of past unsafe navigation are analyzed by using an integrated risk value will be described with reference to FIG. 14.

### [Flowchart of Processing Using Integrated Risk Value]

FIG. 14 is a diagram illustrating an example of a flowchart of processing using an integrated risk value according to the embodiment. As illustrated in FIG. 14, the control unit 15 refers to the integrated risk calculation result information 146 to extract an integrated risk value equal to or greater than a predetermined value (Step S41). The control unit 15 analyzes factors of a collision risk by using the extracted integrated risk value and various types of information (Step S42). Examples of the various types of information include the integrated risk calculation result information 146, map information, meteorological/hydrographic history information, and watch information. Then, the control unit 15 outputs a result of analyzing the factors (Step S43).

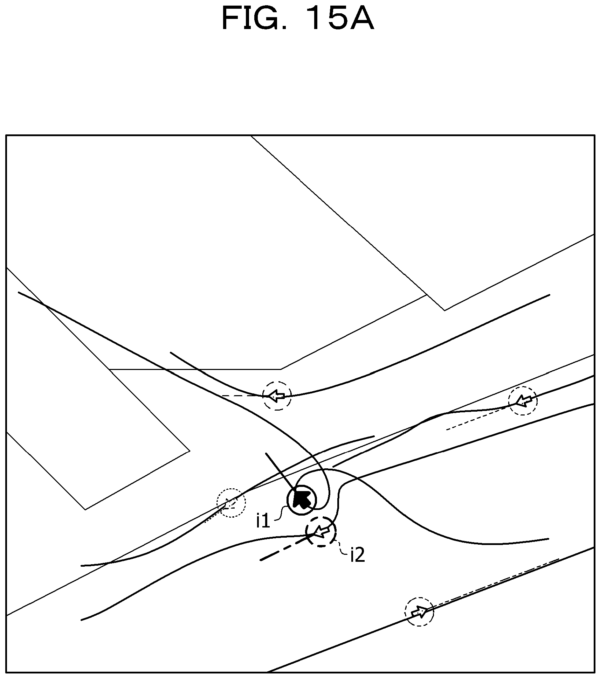

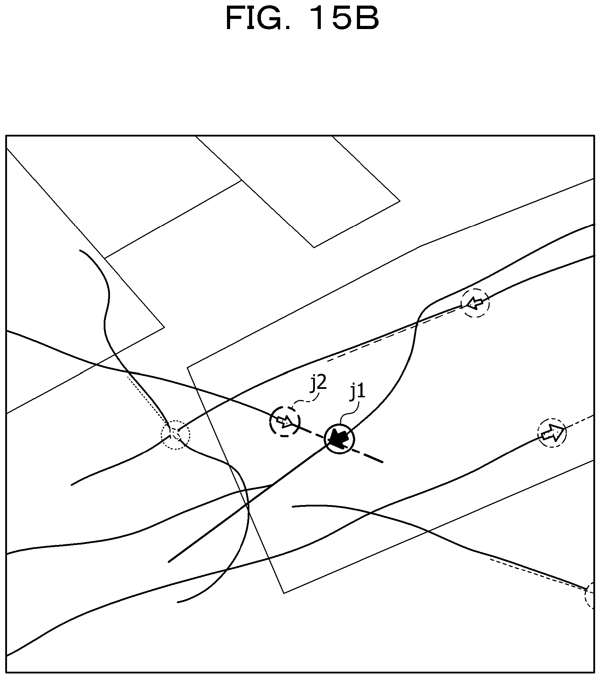

Here, a case will be described where an integrated risk matches an on-site feeling by using an integrated risk value according to the embodiment with reference to FIGs. 15A and 15B. FIGs. 15A and 15B are diagrams illustrating the case where an integrated risk matches an on-site feeling. Note that arrows in circles represent vessels.

FIG. 15A illustrates a case of using a combination of the index information A and the index information C. A vessel denoted by a reference sign i1 makes one turn to perform avoidance, and a degree of change in orientation of a vessel of the index information A has a large value. Furthermore, in that case, the vessel denoted by the reference sign i1 and a vessel denoted by a reference sign i2 are performing avoidance at the same time. Thus, the number of vessels performing avoidance maneuvering of the index information C is "2". Thus, a value related to the index information A and a value related to the index information C, which are added to a base risk value, become large. Therefore, it is decided that the vessels are in a near-miss state from an integrated risk value. This is the case where an integrated risk matches an on-site feeling because it is decided that a collision risk is large even in the on-site feeling.

FIG. 15B illustrates a case of the index information B. It is assumed that a vessel denoted by a reference sign j2 is suddenly decelerating in order to avoid a vessel denoted by a reference sign j1. Although the closest approach distance between the vessel denoted by the reference sign j1 and the vessel denoted by the reference sign j2 are not short, in an on-site feeling, the vessels are in a pattern of avoidance maneuvering which is not standard. Here, a value related to the index information B, which is added to a base risk value, becomes large, and it is decided that the vessels are in a near-miss state from an integrated risk value. This is the case where an integrated risk matches an on-site feeling because it is decided that a collision risk is large even in the on-site feeling.

### [Effects of Embodiment]

According to the embodiment described above, the collision risk calculation device 10 calculates, by using track data of each of a first vessel and a second vessel, a risk value related to a collision between the first vessel and the second vessel at each time point by a predetermined method. The collision risk calculation device 10 specifies a time range before a maximum risk value from the calculated risk values. The collision risk calculation device 10 extracts, from the track data, an action pattern of one or both of the first vessel and the second vessel in the time range. The collision risk calculation device 10 calculates a degree of the action pattern of one or both of the first vessel and the second vessel on the basis of the action pattern. The collision risk calculation device 10 corrects the risk value on the basis of the degree of the action pattern and a weight set for each action pattern. According to such a configuration, the collision risk calculation device 10 may calculate a risk value that matches an on-site feeling by correcting a risk value related to a collision by using a degree of an action pattern of a vessel.

Furthermore, according to the embodiment described above, the collision risk calculation device 10 extracts, for one or both of the first vessel and the second vessel, an amount of change in orientation of a vessel as the action pattern. The collision risk calculation device 10 calculates the sum of absolute values of amounts of change in orientation of a vessel in the time range before the maximum risk value as the degree of the action pattern. According to such a configuration, the collision risk calculation device 10 may quantify a degree of avoidance maneuvering from change in orientation of a vessel.

Furthermore, according to the embodiment described above, the collision risk calculation device 10 extracts, for one or both of the first vessel and the second vessel, an amount of change in speed of a vessel as the action pattern. The collision risk calculation device 10 calculates an average of absolute values of amounts of change in speed of a vessel in the time range before the maximum risk value as the degree of the action pattern. According to such a configuration, the collision risk calculation device 10 may quantify a degree of avoidance maneuvering from change in speed of a vessel.

Furthermore, according to the embodiment described above, for each of the first vessel and the second vessel, the collision risk calculation device 10 estimates a vessel indicating that navigation to avoid a collision is performed by using the degree of the action pattern. The collision risk calculation device 10 further corrects the risk value by including the number of the estimated vessels. According to such a configuration, the collision risk calculation device 10 may correct a risk value more accurately by using the number of vessels performing avoidance maneuvering.

Furthermore, according to the embodiment described above, for each of the first vessel and the second vessel, the collision risk calculation device 10 estimates a start timing of navigation to avoid a collision by using the degree of the action pattern. The collision risk calculation device 10 calculates a delay in the estimated start timing by using the estimated start timing and a start timing of navigation to avoid a collision obtained from the risk value. Then, the collision risk calculation device 10 further corrects the risk value by including the calculated delay in the start timing. According to such a configuration, the collision risk calculation device 10 may correct a risk value more accurately by using a delay in a timing of avoidance maneuvering.

### [Others]

Note that each illustrated component of the collision risk calculation device 10 does not necessarily have to be physically configured as illustrated in the drawings. For example, specific aspects of separation and integration of the collision risk calculation device 10 are not limited to the illustrated ones, and all or a part of the collision risk calculation device 10 may be functionally or physically separated and integrated in an arbitrary unit according to various loads, use situations, or the like. For example, the data complementing unit 152 and the base risk calculation unit 153 may be integrated as one unit. Furthermore, the index information calculation unit 155 may be separated into calculation units, each of which calculates various types of index information. Furthermore, the storage unit 14 may be connected by way of a network as an external device of the collision risk calculation device 10.

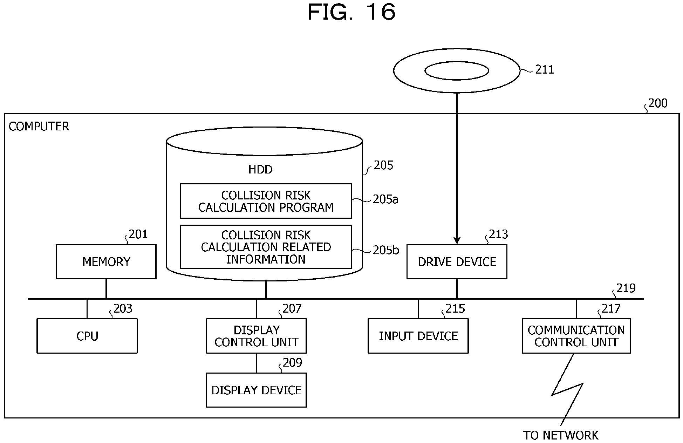

Furthermore, various types of processing described in the embodiment described above may be implemented by a computer such as a personal computer or a workstation executing programs prepared in advance. Thus, in the following, an example of a computer that executes a collision risk calculation program that implements functions similar to the functions of the collision risk calculation device 10 illustrated in FIG. 1 will be described. FIG. 16 is a diagram illustrating an example of the computer that executes the collision risk calculation program.

As illustrated in FIG. 16, a computer 200 includes a CPU 203 that executes various types of arithmetic processing, an input device 215 that receives data input from a user, and a display control unit 207 that controls a display device 209. Furthermore, the computer 200 includes a drive device 213 that reads a program and the like from a storage medium, and a communication control unit 217 that exchanges data with another computer via a network. Furthermore, the computer 200 includes a memory 201 that temporarily stores various types of information and a hard disk drive (HDD) 205. In addition, the memory 201, the CPU 203, the HDD 205, the display control unit 207, the drive device 213, the input device 215, and the communication control unit 217 are connected by a bus 219.

The drive device 213 is a device for a removable disk 210, for example. The HDD 205 stores a collision risk calculation program 205a and a collision risk calculation related information 205b.

The CPU 203 reads the collision risk calculation program 205a, and expands the collision risk calculation program 205a in the memory 201 to execute the collision risk calculation program 205a as a process. Such a process corresponds to each functional unit of the collision risk calculation device 10. The collision risk calculation related information 205b corresponds to the AIS accumulated data 141, the complemented AIS data 142, the base risk information 143, the local maximum time point information 144, the index information 145, and the integrated risk calculation result information 146. In addition, for example, the removable disk 210 stores each piece of information such as the collision risk calculation program 205a.

Note that the collision risk calculation program 205a may not necessarily be stored in the HDD 205 from the beginning. For example, the program is stored in a "portable physical medium" such as a flexible disk (FD), a compact disk read only memory (CD-ROM), a digital versatile disk (DVD), a magneto-optical disk, or an integrated circuit (IC) card, which is inserted into the computer 200. Then, the computer 200 may read the collision risk calculation program 205a from these media to execute the collision risk calculation program 205a.

## Claims

1. A computer implemented method for calculating an integrated collision risk value, that reflects a danger level felt at an actual site between pairs of vessels, said method executing a process comprising:
accumulating AIS information received from vessels at sea at predetermined time intervals, said AIS information associating longitude, latitude, a speed, and a course with a date and time and a vessel identifier;
receiving an instruction regarding a period and sea area for calculating, by referring to the accumulated AIS information of each of a first vessel and a second vessel, a base risk value related to a collision between the first vessel and the second vessel at each time point in the instructed period by a predetermined method;
extracting a section in which the base risk value exceeds a predetermined threshold;
calculating a time point at which the base risk value reaches a local maximum in the extracted section;
specifying a time range before or before and after said time point at which the base risk value reaches the local maximum;
extracting, from the accumulated AIS information, for each of the first vessel and the second vessel, an amount of change in orientation as an action pattern of each of the first vessel and the second vessel in the specified time range,
extracting, from the accumulated AIS information, for each of the first vessel and the second vessel, an amount of change in speed as an action pattern of each of the first vessel and the second vessel in the specified time range;
calculating for each of the first vessel and the second vessel, a moving average of absolute values of amounts of change in orientation in the specified time range as an index information A, and a moving average of absolute values of amounts of change in speed in the specified time range, as an index information B, as a degree of an action pattern of each of the first vessel and the second vessel;
estimating, for each of the first vessel and the second vessel, a vessel that performs navigation to avoid a collision by using the degree of the action pattern and calculating, as an index information C, the number of vessels performing avoidance maneuvering; and
correcting the base risk value into the integrated collision risk value, based on the base risk value, index information A to C, and a weight set for each of the plurality of index information.

2. The method according to claim 1, wherein the process further comprises:
estimating, for each of the first vessel and the second vessel, a start timing of navigation to avoid a collision by using the degree of the action pattern, and
calculating a delay in the estimated start timing by using the start timing and a start timing of navigation to avoid a collision obtained from the risk value, wherein
the correcting includes correcting the risk value into the integrated collision risk value by including the calculated delay in the start timing.

3. A collision risk calculation program that causes at least one computer to execute a process for calculating an integrated collision risk value, that reflects a danger level felt at an actual site between pairs of vessels, the process comprising:
accumulating AIS information received from vessels at sea at predetermined time intervals, said AIS information associating longitude, latitude, a speed, and a course with a date and time and a vessel identifier;
receiving an instruction regarding a period and sea area for calculating, by referring to the accumulated AIS information of each of a first vessel and a second vessel, a base risk value related to a collision between the first vessel and the second vessel at each time point in the instructed period by a predetermined method;
extracting a section in which the base risk value exceeds a predetermined threshold;
calculating a time point at which the base risk value reaches a local maximum in the extracted section;
specifying a time range before or before and after said time point at which the base risk value reaches the local maximum;
extracting, from the accumulated AIS information, for each of the first vessel and the second vessel, an amount of change in orientation as an action pattern of each of the first vessel and the second vessel in the specified time range,
extracting, from the accumulated AIS information, for each of the first vessel and the second vessel, an amount of change in speed as an action pattern of each of the first vessel and the second vessel in the specified time range;
calculating for each of the first vessel and the second vessel, a moving average of absolute values of amounts of change in orientation in the specified time range as an index information A, and a moving average of absolute values of amounts of change in speed in the specified time range, as an index information B, as a degree of an action pattern of each of the first vessel and the second vessel;
estimating, for each of the first vessel and the second vessel, a vessel that performs navigation to avoid a collision by using the degree of the action pattern and calculating, as an index information C, the number of vessels performing avoidance maneuvering; and
correcting the base risk value into the integrated collision risk value, based on the base risk value, index information A to C, and a weight set for each of the plurality of index information.

4. The collision risk calculation program according to claim 3, wherein the process further comprises:
estimating, for each of the first vessel and the second vessel, a start timing of navigation to avoid a collision by using the degree of the action pattern, and
calculating a delay in the estimated start timing by using the start timing and a start timing of navigation to avoid a collision obtained from the risk value, wherein
the correcting includes correcting the risk value into the integrated collision risk value by including the calculated delay in the start timing.

5. A collision risk calculation device for calculating an integrated collision risk value, that reflects a danger level felt at an actual site between pairs of vessels, comprising:
a data acquisition unit (151) for accumulating AIS information received from vessels at sea at predetermined time intervals, said AIS information associating longitude, latitude, a speed, and a course with a date and time and a vessel identifier;
a first calculation unit (153) for receiving an instruction regarding a period and sea area for calculating, by referring to the accumulated AIS information of each of a first vessel and a second vessel, a base risk value related to a collision between the first vessel and the second vessel at each time point in the instructed period by a predetermined method;
a local maximum time point calculation unit (154) for extracting a section in which the base risk value exceeds a predetermined threshold; and for calculating a time point at which the base risk value reaches a local maximum in the extracted section;
a specification unit (155) for specifying a time range before or before and after said time point at which the base risk value reaches the local maximum;
an extraction unit (155) adapted to extract, from the accumulated AIS information, for each of the first vessel and the second vessel, an amount of change in orientation as an action pattern of each of the first vessel and the second vessel in the specified time range,
the extraction unit (155) being adapted for extracting, from the accumulated AIS information, for each of the first vessel and the second vessel, an amount of change in speed as an action pattern of each of the first vessel and the second vessel in the specified time range;
a second calculation unit (155) adapted to calculate for each of the first vessel and the second vessel, a moving average of absolute values of amounts of change in orientation in the specified time range as an index information A, and a moving average of absolute values of amounts of change in speed in the specified time range, as an index information B, as a degree of an action pattern of each of the first vessel and the second vessel;
an estimation unit adapted to estimate, for each of the first vessel and the second vessel, a vessel that performs navigation to avoid a collision by using the degree of the action pattern; and calculating, as an index information C, the number of vessels performing avoidance maneuvering; and
a correction unit adapted to correct the base risk value into the integrated collision risk value, based on the base risk value, index information A to C, and a weight set for each of the plurality of index information.

6. The collision risk calculation device according to claim 5, wherein
the first calculation unit is adapted to calculate, for each of the first vessel and the second vessel, a start timing of navigation to avoid a collision by using the degree of the action pattern,
the first calculation unit is adapted to calculate a delay in the estimated start timing by using the start timing and a start timing of navigation to avoid a collision obtained from the risk value, and
the correction unit is adapted to correct the risk value into the integrated collision risk value by including the calculated delay in the start timing.

## Patentansprüche

1. Computerimplementiertes Verfahren zum Berechnen eines integrierten Kollisionsrisikowerts, der ein an einem tatsächlichen Standort zwischen Paaren von Schiffen wahrgenommene Gefährdungsniveau widerspiegelt, wobei das Verfahren einen Prozess ausführt, umfassend:
Ansammeln von AIS-Informationen, die von Schiffen auf See in vorbestimmten Zeitintervallen empfangen werden, wobei die AIS-Informationen Längengrad, Breitengrad, eine Geschwindigkeit und einen Kurs mit einem Datum und einer Zeit sowie einer Schiffskennung verknüpfen;
Empfangen einer Anweisung bezüglich eines Zeitraums und eines Seegebiets zum Berechnen eines Basisrisikowerts bezüglich einer Kollision zwischen einem ersten Schiff und einem zweiten Schiff zu jedem Zeitpunkt in dem angewiesenen Zeitraum durch ein vorbestimmtes Verfahren unter Bezugnahme auf die angesammelten AIS-Informationen jedes von einem ersten Schiff und einem zweiten Schiff;
Extrahieren eines Abschnitts, in dem der Basisrisikowert einen vorbestimmten Schwellenwert überschreitet;
Berechnen eines Zeitpunkts, an dem der Basisrisikowert im extrahierten Abschnitt ein lokales Maximum erreicht;
Spezifizieren eines Zeitraums vor oder vor und nach dem Zeitpunkt, an dem der Basisrisikowert das lokale Maximum erreicht;
Extrahieren, aus den angesammelten AIS-Informationen, für jedes von dem ersten Schiff und dem zweiten Schiff, eines Änderungsbetrags der Ausrichtung als ein Handlungsmuster jedes von dem ersten Schiff und dem zweiten Schiff in dem spezifischen Zeitraum,
Extrahieren, aus den angesammelten AIS-Informationen, für jedes von dem ersten Schiff und dem zweiten Schiff, eines Änderungsbetrags der Geschwindigkeit als ein Handlungsmuster jedes von dem ersten Schiff und dem zweiten Schiff in dem spezifischen Zeitraum;
Berechnen, für jedes von dem ersten Schiff und dem zweiten Schiff, eines gleitenden Durchschnitts von absoluten Werten des Änderungsbetrags der Ausrichtung in dem spezifischen Zeitraum als Indexinformationen A und eines gleitenden Durchschnitts von absoluten Werten des Änderungsbetrags der Geschwindigkeit als Indexinformationen B, als einen Grad eines Handlungsmusters jedes von dem ersten Schiff und dem zweiten Schiff;
Schätzen, für jedes von dem ersten Schiff und dem zweiten Schiff, eines Schiffs, das Navigation durchführt, um eine Kollision zu vermeiden, durch Verwenden des Grads des Handlungsmusters und Berechnen, als Indexinformationen C, die Anzahl von Schiffen, die ein Vermeidungsmanövrieren durchführen; und
Korrigieren des Basisrisikowerts in den integrierten Kollisionsrisikowert, basierend auf dem Basisrisikowert, den Indexinformationen A bis C und einem Gewichtungssatz für jede der Vielzahl von Indexinformationen.

2. Verfahren nach Anspruch 1, wobei der Prozess weiter umfasst:
Schätzen, für jedes von dem ersten Schiff und dem zweiten Schiff, eines Startzeitpunkts der Navigation zum Vermeiden einer Kollision durch Verwenden des Grads des Handlungsmusters, und
Berechnen einer Verzögerung des geschätzten Startzeitpunkts durch Verwenden des Startzeitpunkts und eines Startzeitpunkts der Navigation zum Vermeiden einer Kollision, der aus dem Risikowert erhalten wurde, wobei
das Korrigieren ein Korrigieren des Risikowerts in den integrierten Kollisionsrisikowert durch Einschließen der berechneten Verzögerung des Startzeitpunkts einschließt.

3. Kollisionsrisikoberechnungsprogramm, das einen Computer veranlasst, einen Prozess zum Berechnen eines integrierten Kollisionsrisikowerts, der ein an einem tatsächlichen Standort zwischen Paaren von Schiffen wahrgenommene Gefährdungsniveau widerspiegelt, auszuführen, der Prozess umfassend:
Ansammeln von AIS-Informationen, die von Schiffen auf See in vorbestimmten Zeitintervallen empfangen werden, wobei die AIS-Informationen Längengrad, Breitengrad, eine Geschwindigkeit und einen Kurs mit einem Datum und einer Zeit sowie einer Schiffskennung verknüpfen;
Empfangen einer Anweisung bezüglich eines Zeitraums und eines Seegebiets zum Berechnen eines Basisrisikowerts bezüglich einer Kollision zwischen einem ersten Schiff und einem zweiten Schiff zu jedem Zeitpunkt in dem angewiesenen Zeitraum durch ein vorbestimmtes Verfahren unter Bezugnahme auf die angesammelten AIS-Informationen jedes von einem ersten Schiff und einem zweiten Schiff;
Extrahieren eines Abschnitts, in dem der Basisrisikowert einen vorbestimmten Schwellenwert überschreitet;
Berechnen eines Zeitpunkts, an dem der Basisrisikowert im extrahierten Abschnitt ein lokales Maximum erreicht;
Spezifizieren eines Zeitraums vor oder vor und nach dem Zeitpunkt, an dem der Basisrisikowert das lokale Maximum erreicht;
Extrahieren, aus den angesammelten AIS-Informationen, für jedes von dem ersten Schiff und dem zweiten Schiff, eines Änderungsbetrags der Ausrichtung als ein Handlungsmuster jedes von dem ersten Schiff und dem zweiten Schiff in dem spezifischen Zeitraum,
Extrahieren, aus den angesammelten AIS-Informationen, für jedes von dem ersten Schiff und dem zweiten Schiff, eines Änderungsbetrags der Geschwindigkeit als ein Handlungsmuster jedes von dem ersten Schiff und dem zweiten Schiff in dem spezifischen Zeitraum;
Berechnen, für jedes von dem ersten Schiff und dem zweiten Schiff, eines gleitenden Durchschnitts von absoluten Werten des Änderungsbetrags der Ausrichtung in dem spezifischen Zeitraum als Indexinformationen A und eines gleitenden Durchschnitts von absoluten Werten des Änderungsbetrags der Geschwindigkeit als Indexinformationen B, als einen Grad eines Handlungsmusters jedes von dem ersten Schiff und dem zweiten Schiff;
Schätzen, für jedes von dem ersten Schiff und dem zweiten Schiff, eines Schiffs, das Navigation durchführt, um eine Kollision zu vermeiden, durch Verwenden des Grads des Handlungsmusters und Berechnen, als Indexinformationen C, die Anzahl von Schiffen, die ein Vermeidungsmanövrieren durchführen; und
Korrigieren des Basisrisikowerts in den integrierten Kollisionsrisikowert, basierend auf dem Basisrisikowert, den Indexinformationen A bis C und einem Gewichtungssatz für jede der Vielzahl von Indexinformationen.

4. Kollisionsrisikoberechnungsprogramm nach Anspruch 3, wobei der Prozess weiter umfasst:
Schätzen, für jedes von dem ersten Schiff und dem zweiten Schiff, eines Startzeitpunkts der Navigation zum Vermeiden einer Kollision durch Verwenden des Grads des Handlungsmusters, und
Berechnen einer Verzögerung des geschätzten Startzeitpunkts durch Verwenden des Startzeitpunkts und eines Startzeitpunkts der Navigation zum Vermeiden einer Kollision, der aus dem Risikowert erhalten wurde, wobei
das Korrigieren ein Korrigieren des Risikowerts in den integrierten Kollisionsrisikowert durch Einschließen der berechneten Verzögerung des Startzeitpunkts einschließt.

5. Kollisionsrisikoberechnungsvorrichtung zum Berechnen eines integrierten Kollisionsrisikowerts, der ein an einem tatsächlichen Standort zwischen Paaren von Schiffen wahrgenommene Gefährdungsniveau widerspiegelt, umfassend:
eine Datenansammlungseinheit (151) zum Ansammeln von AIS-Informationen, die von Schiffen auf See in vorbestimmten Zeitintervallen empfangen werden, wobei die AIS-Informationen Längengrad, Breitengrad, eine Geschwindigkeit und einen Kurs mit einem Datum und einer Zeit sowie einer Schiffskennung verknüpfen;
eine erste Berechnungseinheit (153) zum Empfangen einer Anweisung bezüglich eines Zeitraums und eines Seegebiets zum Berechnen eines Basisrisikowerts bezüglich einer Kollision zwischen einem ersten Schiff und einem zweiten Schiff zu jedem Zeitpunkt in dem angewiesenen Zeitraum durch ein vorbestimmtes Verfahren unter Bezugnahme auf die angesammelten AIS-Informationen jedes von einem ersten Schiff und einem zweiten Schiff;
eine Berechnungseinheit (154) für ein lokales Maximum eines Zeitpunkts zum Extrahieren eines Abschnitts, in dem der Basisrisikowert einen vorbestimmten Schwellenwert überschreitet; und zum Berechnen eines Zeitpunkts, an dem der Basisrisikowert im extrahierten Abschnitt ein lokales Maximum erreicht;
eine Spezifizierungseinheit (155) zum Spezifizieren eines Zeitraums vor oder vor und nach dem Zeitpunkt, an dem der Basisrisikowert das lokale Maximum erreicht;
eine Extraktionseinheit (155), die angepasst ist, um aus den angesammelten AIS-Informationen, für jedes von dem ersten Schiff und dem zweiten Schiff einen Änderungsbetrag der Ausrichtung als ein Handlungsmuster jedes von dem ersten Schiff und dem zweiten Schiff in dem spezifischen Zeitraum zu extrahieren, und
wobei die Extraktionseinheit (155) angepasst ist, um aus den angesammelten AIS-Informationen, für jedes von dem ersten Schiff und dem zweiten Schiff einen Änderungsbetrag der Geschwindigkeit als ein Handlungsmuster jedes von dem ersten Schiff und dem zweiten Schiff in dem spezifischen Zeitraum zu extrahieren;
eine zweite Berechnungseinheit (155), die angepasst ist, um für jedes von dem ersten Schiff und dem zweiten Schiff, einen gleitenden Durchschnitt von absoluten Werten des Änderungsbetrags der Ausrichtung in dem spezifischen Zeitraum als Indexinformationen A und einen gleitenden Durchschnitt von absoluten Werten des Änderungsbetrags der Geschwindigkeit als Indexinformationen B, als einen Grad eines Handlungsmusters jedes von dem ersten Schiff und dem zweiten Schiff zu berechnen;
eine Schätzeinheit, die angepasst ist, um für jedes von dem ersten Schiff und dem zweiten Schiff ein Schiff, das Navigation durchführt, um eine Kollision zu vermeiden, zu schätzen, durch Verwenden des Grads des Handlungsmusters; und als Indexinformationen C, die Anzahl von Schiffen, die ein Vermeidungsmanövrieren durchführen, zu berechnen; und
einer Korrektureinheit, die angepasst ist, um den Basisrisikowert in den integrierten Kollisionsrisikowert zu korrigieren, basierend auf dem Basisrisikowert, den Indexinformationen A bis C und einem Gewichtungssatz für jede der Vielzahl von Indexinformationen.

6. Kollisionsrisikoberechnungsvorrichtung nach Anspruch 5, wobei
die erste Berechnungseinheit angepasst ist, um für jedes von dem ersten Schiff und dem zweiten Schiff einen Startzeitpunkt der Navigation zum Vermeiden einer Kollision durch Verwenden des Grads des Handlungsmusters zu berechnen,
die erste Berechnungseinheit angepasst ist, um eine Verzögerung des geschätzten Startzeitpunkts durch Verwenden des Startzeitpunkts und eines Startzeitpunkts der Navigation zum Vermeiden einer Kollision, der aus dem Risikowert erhalten wurde, zu berechnen, und
die Korrektureinheit angepasst ist, um den Risikowert in den integrierten Kollisionsrisikowert zu korrigieren, durch Einschließen der berechneten Verzögerung des Startzeitpunkts.

## Revendications

1. Procédé mis en œuvre par ordinateur destiné à calculer une valeur de risque de collision intégrée, qui reflète un niveau de danger ressenti au niveau d'un site réel entre des paires de navires, ledit procédé mettant en œuvre un processus comprenant :
l'accumulation d'informations AIS reçues en provenance de navires sur la mer à intervalles de temps prédéterminés, lesdites informations AIS associant longitude, latitude, une vitesse, et un cap avec une date et une heure et un identifiant de navire ;
la réception d'une instruction concernant une période et une zone de la mer pour calculer, en se référant aux informations AIS accumulées de chacun d'un premier navire et d'un deuxième navire, une valeur de risque de base liée à une collision entre le premier navire et le deuxième navire à chaque instant dans la période instruite par un procédé prédéterminé ;
l'extraction d'une section dans laquelle la valeur de risque de base dépasse un seuil prédéterminé ;
le calcul d'un instant auquel la valeur de risque de base atteint un maximum local dans la section extraite ;
la spécification d'une plage de temps avant ou avant et après ledit instant auquel la valeur de risque de base atteint le maximum local ;
l'extraction, depuis les informations AIS accumulées, pour chacun du premier navire et du deuxième navire, d'une quantité de changement d'orientation en tant que motif d'action de chacun du premier navire et du deuxième navire dans la plage de temps spécifiée,
l'extraction, depuis les informations AIS accumulées, pour chacun du premier navire et du deuxième navire, d'une quantité de changement de vitesse en tant que motif d'action de chacun du premier navire et du deuxième navire dans la plage de temps spécifiée ;
le calcul, pour chacun du premier navire et du deuxième navire, d'une moyenne mobile de valeurs absolues de quantités de changement d'orientation dans la plage de temps spécifiée en tant qu'information d'indice A, et d'une moyenne mobile de valeurs absolues de quantités de changement de vitesse dans la plage de temps spécifiée, en tant qu'information d'indice B, comme degré d'un motif d'action de chacun du premier navire et du deuxième navire ;
l'estimation, pour chacun du premier navire et du deuxième navire, d'un navire qui met en œuvre une navigation pour éviter une collision en utilisant le degré du motif d'action et le calcul, en tant qu'information d'indice C, du nombre de navires mettant en œuvre une manœuvre d'évitement ; et
la correction de la valeur de risque de base dans la valeur de risque de collision intégrée, sur la base de la valeur de risque de base, des informations d'indice A à C, et d'un poids défini pour chacune de la pluralité d'informations d'indice.

2. Procédé selon la revendication 1, dans lequel le processus comprend en outre :
l'estimation, pour chacun du premier navire et du deuxième navire, d'un moment de début de navigation pour éviter une collision en utilisant le degré du motif d'action, et
le calcul d'un retard du moment de début estimé en utilisant le moment de début et un moment de début de navigation pour éviter une collision obtenu à partir de la valeur de risque, dans lequel
la correction inclut la correction de la valeur de risque dans la valeur de risque de collision intégrée en incluant le retard calculé dans le moment de début.

3. Programme de calcul de risque de collision qui amène au moins un ordinateur à mettre en œuvre un processus pour calculer une valeur de risque de collision intégrée, qui reflète un niveau de danger ressenti au niveau d'un site réel entre des paires de navires, le processus comprenant :
l'accumulation d'informations AIS reçues en provenance de navires sur la mer à intervalles de temps prédéterminés, lesdites informations AIS associant longitude, latitude, une vitesse, et un cap avec une date et une heure et un identifiant de navire ;
la réception d'une instruction concernant une période et une zone de la mer pour calculer, en se référant aux informations AIS accumulées de chacun d'un premier navire et d'un deuxième navire, une valeur de risque de base liée à une collision entre le premier navire et le deuxième navire à chaque instant dans la période instruite par un procédé prédéterminé ;
l'extraction d'une section dans laquelle la valeur de risque de base dépasse un seuil prédéterminé ;
le calcul d'un instant auquel la valeur de risque de base atteint un maximum local dans la section extraite ;
la spécification d'une plage de temps avant ou avant et après ledit instant auquel la valeur de risque de base atteint le maximum local ;
l'extraction, depuis les informations AIS accumulées, pour chacun du premier navire et du deuxième navire, d'une quantité de changement d'orientation en tant que motif d'action de chacun du premier navire et du deuxième navire dans la plage de temps spécifiée,
l'extraction, depuis les informations AIS accumulées, pour chacun du premier navire et du deuxième navire, d'une quantité de changement de vitesse en tant que motif d'action de chacun du premier navire et du deuxième navire dans la plage de temps spécifiée ;
le calcul, pour chacun du premier navire et du deuxième navire, d'une moyenne mobile de valeurs absolues de quantités de changement d'orientation dans la plage de temps spécifiée en tant qu'information d'indice A, et d'une moyenne mobile de valeurs absolues de quantités de changement de vitesse dans la plage de temps spécifiée, en tant qu'information d'indice B, comme degré d'un motif d'action de chacun du premier navire et du deuxième navire ;
l'estimation, pour chacun du premier navire et du deuxième navire, d'un navire qui met en œuvre une navigation pour éviter une collision en utilisant le degré du motif d'action et le calcul, en tant qu'information d'indice C, du nombre de navires mettant en œuvre une manoeuvre d'évitement ; et
la correction de la valeur de risque de base dans la valeur de risque de collision intégrée, sur la base de la valeur de risque de base, des informations d'indice A à C, et d'un poids défini pour chacune de la pluralité d'informations d'indice.

4. Programme de calcul de risque de collision selon la revendication 3, dans lequel le processus comprend en outre :
l'estimation, pour chacun du premier navire et du deuxième navire, d'un moment de début de navigation pour éviter une collision en utilisant le degré du motif d'action, et
le calcul d'un retard du moment de début estimé en utilisant le moment de début et un moment de début de navigation pour éviter une collision obtenu à partir de la valeur de risque, dans lequel
la correction inclut la correction de la valeur de risque dans la valeur de risque de collision intégrée en incluant le retard calculé dans le moment de début.

5. Dispositif de calcul de risque de collision destiné à calculer une valeur de risque de collision intégrée, qui reflète un niveau de danger ressenti au niveau d'un site réel entre des paires de navires, comprenant :
une unité d'acquisition (151) de données destinée à accumuler des informations AIS reçues en provenance de navires sur la mer à intervalles de temps prédéterminés, lesdites informations AIS associant longitude, latitude, une vitesse, et un cap avec une date et une heure et un identifiant de navire ;
une première unité de calcul (153) destinée à recevoir une instruction concernant une période et une zone de la mer pour calculer, en se référant aux informations AIS accumulées de chacun d'un premier navire et d'un deuxième navire, une valeur de risque de base liée à une collision entre le premier navire et le deuxième navire à chaque instant dans la période instruite par un procédé prédéterminé ;
une unité de calcul (154) d'instant maximum local destiné à extraire une section dans laquelle la valeur de risque de base dépasse un seuil prédéterminé ; et à calculer un instant auquel la valeur de risque de base atteint un maximum local dans la section extraite ;
une unité de spécification (155) destinée à spécifier une plage de temps avant ou avant et
après ledit instant auquel la valeur de risque de base atteint le maximum local ;
une unité d'extraction (155) adaptée pour extraire, depuis les informations AIS accumulées, pour chacun du premier navire et du deuxième navire, une quantité de changement d'orientation en tant que motif d'action de chacun du premier navire et du deuxième navire dans la plage de temps spécifiée, et
l'unité d'extraction (155) étant adaptée pour extraire, depuis les informations AIS accumulées, pour chacun du premier navire et du deuxième navire, une quantité de changement de vitesse en tant que motif d'action de chacun du premier navire et du deuxième navire dans la plage de temps spécifiée ;
une deuxième unité de calcul (155) adaptée pour calculer, pour chacun du premier navire et du deuxième navire, une moyenne mobile de valeurs absolues de quantités de changement d'orientation dans la plage de temps spécifiée en tant qu'information d'indice A, et d'une moyenne mobile de valeurs absolues de quantités de changement de vitesse dans la plage de temps spécifiée, en tant qu'information d'indice B, comme degré d'un motif d'action de chacun du premier navire et du deuxième navire ;
une unité d'estimation adaptée pour estimer, pour chacun du premier navire et du deuxième navire, un navire qui met en œuvre une navigation pour éviter une collision en utilisant le degré du motif d'action ; et calculer, en tant qu'information d'indice C, le nombre de navires mettant en œuvre une manoeuvre d'évitement ; et
une unité de correction adaptée pour corriger la valeur de risque de base dans la valeur de risque de collision intégrée, sur la base de la valeur de risque de base, des informations d'indice A à C, et d'un poids défini pour chacune de la pluralité d'informations d'indice.

6. Dispositif de calcul de risque de collision selon la revendication 5, dans lequel
la première unité de calcul est adaptée pour calculer, pour chacun du premier navire et du deuxième navire, un moment de début de navigation pour éviter une collision en utilisant le degré du motif d'action,
la première unité de calcul est adaptée pour calculer un retard du moment de début estimé en utilisant le moment de début et un moment de début de navigation pour éviter une collision obtenu à partir de la valeur de risque, et
l'unité de correction est adaptée pour corriger la valeur de risque dans la valeur de risque de collision intégrée en incluant le retard calculé dans le moment de début.
